# EUROPEAN PATENT APPLICATION

(11) **EP 4 502 938 A1**
(43) Date of publication of application: **05.02.2025**
(21) Application number: 23780519.7
(22) Date of filing: 28.03.2023
(51) Int. Cl.: G06T 7/10, G01B 11/245

(54) **DATA PROCESSING DEVICE, ROBOT CONTROL SYSTEM, AND PROGRAM**

(30) Priority: 30.03.2022 JP 2022057072
(71) Applicant: Kyocera Corporation, Kyoto-shi, Kyoto 612-8501 (JP); KYOCERA Document Solutions Inc., Osaka-shi, Osaka, 540-8585 (JP)
(72) Inventor: GRACIA Fidelia, Kyoto-shi, Kyoto 612-8501 (JP); ISHIDA Takayuki, Kyoto-shi, Kyoto 612-8501 (JP); MIYAMURA Hiroaki, Kyoto-shi, Kyoto 612-8501 (JP); TSUDA Mineyuki, Kyoto-shi, Kyoto 612-8501 (JP); MIYAMOTO Takuya, Kyoto-shi, Kyoto 612-8501 (JP); TANAKA Kazunori, Osaka-shi, Osaka 540-8585 (JP)
(74) Representative: TBK
(86) International application number: PCT/JP2023/012502
(87) International publication number: WO 2023/190510

(57) **Abstract**

A data processing apparatus includes a segmentation unit, a converter, and a point cloud processing unit. The segmentation unit is configured to divide at least a part of distance image data including distance information to a measurement point in a measurement space into a plurality of first distance image segment data depending on the distance information. The converter is configured to individually convert each of the plurality of first distance image segment data to first point cloud segment data being point cloud data including coordinate information of the measurement point in the measurement space. The point cloud processing unit is configured to individually perform processing on each of a plurality of the first point cloud segment data respectively obtained from the plurality of first distance image segment data in the converter.

## Description

### TECHNICAL FIELD

The present disclosure relates to data processing technology.

### BACKGROUND ART

Patent Document 1 describes a technology related to processing of point cloud data.

### PRIOR ART DOCUMENTS

### PATENT DOCUMENTS

Patent Document 1: Japanese Patent Application Laid-Open No. 2012-13660

### SUMMARY

A data processing apparatus, a robot control system, and a program are disclosed. In one embodiment, a data processing apparatus includes a segmentation unit, a converter, and a point cloud processing unit. The segmentation unit is configured to divide at least a part of distance image data including distance information to a measurement point in a measurement space into a plurality of first distance image segment data depending on the distance information. The converter is configured to individually convert each of the plurality of first distance image segment data to first point cloud segment data being point cloud data including coordinate information of the measurement point in the measurement space. The point cloud processing unit is configured to individually perform processing on each of a plurality of the first point cloud segment data respectively obtained from the plurality of first distance image segment data in the converter.

In one embodiment, a data processing apparatus includes a converter, a segmentation unit, and a point cloud processing unit. The converter is configured to convert at least a part of distance image data including distance information to a measurement point in a measurement space to first point cloud data including coordinate information of the measurement point in the measurement space. The segmentation unit is configured to divide at least a part of the first point cloud data into a plurality of first point cloud segment data depending on a coordinate value of the measurement space in a depth direction. The point cloud processing unit is configured to individually perform processing on each of the plurality of first point cloud segment data.

In one embodiment, a robot control system includes the segmentation unit, the converter, and the point cloud processing unit included in the above data processing apparatus, and a robot controller. The robot controller is configured to control a robot, based on the plurality of first point cloud segment data processed in the point cloud processing unit or combined point cloud data obtained by combining the plurality of first point cloud segment data.

In one embodiment, a program is configured to cause a computer apparatus to divide at least a part of distance image data including distance information to a measurement point in a measurement space into a plurality of first distance image segment data depending on the distance information. The program is configured to cause the computer apparatus to individually convert each of the plurality of first distance image segment data to first point cloud segment data being point cloud data including coordinate information of the measurement point in the measurement space. The program is configured to cause the computer apparatus to individually perform processing on each of a plurality of the first point cloud segment data respectively obtained from the plurality of first distance image segment data.

In one embodiment, a program is configured to cause a computer apparatus to convert at least a part of distance image data including distance information to a measurement point in a measurement space to first point cloud data including coordinate information of the measurement point in the measurement space. The program is configured to cause the computer apparatus to divide at least a part of the first point cloud data into a plurality of first point cloud segment data depending on a coordinate value of the measurement space in a depth direction. The program is configured to cause the computer apparatus to individually perform processing on each of the plurality of first point cloud segment data.

In one embodiment, a data processing apparatus includes an identification unit, a converter, and a point cloud processing unit. The identification unit is configured to identify first partial distance image data including distance information related to a first object in a measurement space and second partial distance image data including distance information related to a second object in the measurement space in distance image data including the distance information to a measurement point in the measurement space. The converter is configured to convert first distance partial image data to first point cloud data, and convert second partial image data to second point cloud data. The point cloud processing unit is configured to perform different processings on the first point cloud data and the second point cloud data.

In one embodiment, a data processing apparatus includes a converter, an identification unit, and a point cloud processing unit. The converter is configured to convert at least a part of distance image data including distance information to a measurement point in a measurement space to point cloud data including coordinate information of the measurement point in the measurement space. The identification unit is configured to identify first point cloud data including the coordinate information related to a first object in the measurement space and second point cloud data including the coordinate information related to a second object in the measurement space in the point cloud data. The point cloud processing unit is configured to perform different processings on the first point cloud data and the second point cloud data.

In one embodiment, a robot control system includes the identification unit, the converter, and the point cloud processing unit included in the above data processing apparatus, and a robot controller. The robot controller is configured to control a robot, based on the first point cloud data and the second point cloud data processed in the point cloud processing unit, or based on combined point cloud data obtained by combining the first point cloud data and the second point cloud data.

In one embodiment, a program is configured to cause a computer apparatus to identify first partial distance image data including distance information related to a first object in a measurement space and second partial distance image data including distance information related to a second object in the measurement space in distance image data including the distance information to a measurement point in the measurement space. The program is configured to cause the computer apparatus to convert first distance partial image data to first point cloud data, and convert second partial image data to second point cloud data. The program is configured to cause the computer apparatus to perform different processings on the first point cloud data and the second point cloud data.

In one embodiment, a program is configured to cause a computer apparatus to convert at least a part of distance image data including distance information to a measurement point in a measurement space to point cloud data including coordinate information of the measurement point in the measurement space. The program is configured to cause the computer apparatus to identify first point cloud data including the coordinate information related to a first object in the measurement space and second point cloud data including the coordinate information related to a second object in the measurement space in the point cloud data. The program is configured to cause the computer apparatus to perform different processings on the first point cloud data and the second point cloud data.

### BRIEF DESCRIPTION OF DRAWINGS

FIG. 1 is a schematic diagram illustrating one example of a measurement system.
FIG. 2 is a schematic diagram illustrating one example of a data processing apparatus.
FIG. 3 is a schematic diagram illustrating one example of a sensor apparatus.
FIG. 4 is a schematic diagram for illustrating one example of distance information included in distance image data.
FIG. 5 is a schematic diagram for illustrating one example of an orthogonal coordinate system related to point cloud data.
FIG. 6 is a schematic diagram illustrating one example of point cloud data.
FIG. 7 is a schematic diagram illustrating one example of a controller of the data processing apparatus.
FIG. 8 is a schematic diagram illustrating one example of point cloud generation processing.
FIG. 9 is a schematic diagram of one example of a plurality of distance sections used in segmentation processing.
FIG. 10 is a schematic diagram illustrating one example of the point cloud generation processing.
FIG. 11 is a schematic diagram illustrating one example of the controller of the data processing apparatus.
FIG. 12 is a schematic diagram illustrating one example of the point cloud generation processing.
FIG. 13 is a schematic diagram illustrating one example of the point cloud generation processing.
FIG. 14 is a schematic diagram illustrating one example of the point cloud generation processing.
FIG. 15 is a schematic diagram illustrating one example of the point cloud generation processing.
FIG. 16 is a schematic diagram illustrating one example of the controller of the data processing apparatus.
FIG. 17 is a schematic diagram illustrating one example of the point cloud generation processing.
FIG. 18 is a schematic diagram illustrating one example of the controller of the data processing apparatus.
FIG. 19 is a schematic diagram illustrating one example of the point cloud generation processing.
FIG. 20 is a schematic diagram illustrating one example of the point cloud generation processing.
FIG. 21 is a schematic diagram illustrating one example of the controller of the data processing apparatus.
FIG. 22 is a schematic diagram illustrating one example of the point cloud generation processing.
FIG. 23 is a schematic diagram illustrating one example of the point cloud generation processing.
FIG. 24 is a schematic diagram illustrating one example of the point cloud generation processing.
FIG. 25 is a schematic diagram illustrating one example of the point cloud generation processing.
FIG. 26 is a schematic diagram illustrating one example of a robot control system.

### DESCRIPTION OF EMBODIMENTS

### Embodiment 1

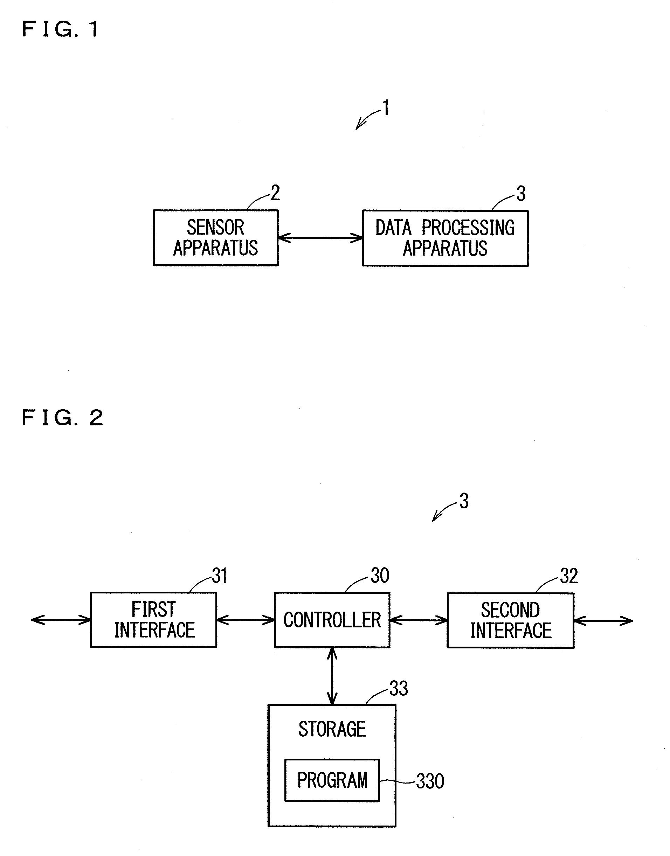

FIG. 1 is a schematic diagram illustrating one example of a configuration of a measurement system 1 according to Embodiment 1. The measurement system 1 is, for example, a system that can measure three-dimensional positions of measurement points in a measurement space being a target space to be measured in a non-contact manner. In the measurement space, at least one object is present. The measurement points are, for example, located on a surface of the object in the measurement space.

As illustrated in FIG. 1, the measurement system 1 includes, for example, a sensor apparatus 2 and a data processing apparatus 3. The sensor apparatus 2 acquires, for example, distance information to a measurement point in the measurement space and color information of the measurement point in the measurement space. The data processing apparatus 3 acquires a three-dimensional position of the measurement point in the measurement space, based on the distance information and the color information acquired in the sensor apparatus 2.

### <Configuration Example of Data Processing Apparatus>

FIG. 2 is a schematic diagram illustrating one example of a configuration of the data processing apparatus 3. As illustrated in FIG. 2, the data processing apparatus 3 includes, for example, a controller 30, a first interface 31, a second interface 32, and a storage 33. It can also be said that the data processing apparatus 3 is a data processing circuit, for example. The data processing apparatus 3 is a type of computer apparatus, for example.

The first interface 31 can perform communication with the sensor apparatus 2. It can also be said that the first interface 31 is an interface circuit, for example. It can also be said that the first interface 31 is a communication unit or a communication circuit, for example.

The first interface 31 may perform wired communication with the sensor apparatus 2, or may perform wireless communication therewith. The first interface 31 may communicate with the sensor apparatus 2 in conformity with at least one communication standard. The at least one communication standard with which the first interface 31 conforms may include at least one of a Universal Serial Bus (USB), an Inter-Integrated Circuit (I2C), a Clocked Serial Interface (CSI), a Serial Peripheral Interface (SPI), WiFi, and Ethernet, for example. The first interface 31 may communicate with the sensor apparatus 2 via the Internet.

The second interface 32 can communicate with an external apparatus of the measurement system 1 (also simply referred to as an external apparatus). The second interface 32 can communicate with at least one external apparatus. It can also be said that the second interface 32 is an interface circuit, for example. It can also be said that the second interface 32 is a communication unit or a communication circuit, for example.

The second interface 32 may perform wired communication with the external apparatus, or may perform wireless communication therewith. The second interface 32 may communicate with the external apparatus in conformity with at least one communication standard. The at least one communication standard with which the second interface 32 conforms may include at least one of a USB, an I2C, a CSI, an SPI, WiFi, and Ethernet, for example. The second interface 32 may communicate with the external apparatus via the Internet. The at least one external apparatus with which the second interface 32 can communicate may include a display apparatus, or may include a server such as a cloud server. The display apparatus with which the second interface 32 can communicate may be near-eye displays (NEDs) such as a heads-up display (HUD) and a head-mounted device (HMD). The at least one external apparatus may include a mobile device. The mobile device may be a mobile phone such as a smartphone, may be a tablet terminal, may be a personal computer, or may be a wearable device. The wearable device with which the second interface 32 can communicate may be an arm-worn type such as a wristband type or a wristwatch type, may be a head-worn type such as a headband type or an eyeglass type, or may be a body-worn type such as a garment type.

The controller 30 can integrally manage operations of the data processing apparatus 3 by controlling other constituent elements of the data processing apparatus 3. It can also be said that the controller 30 is a control circuit, for example. As will be described in further detail below, the controller 30 includes at least one processor in order to provide control and processing capabilities for executing various functions.

According to various embodiments, the at least one processor may be executed as a single integrated circuit (IC), or as a plurality of communicably connected integrated circuit ICs and/or discrete circuits. The at least one processor can be executed in accordance with various known technologies.

In one embodiment, the processor includes one or more circuits or units configured to perform one or more data computing procedures or processes by executing instructions stored in an associated memory, for example. In other embodiments, the processor may be implemented as firmware (e.g. discrete logic components) configured to perform one or more data computing procedures or processes.

According to various embodiments, the processor may include one or more processors, controllers, microprocessors, microcontrollers, application specific integrated circuits (ASICs), digital signal processors, programmable logic devices, field programmable gate arrays, any combination of these devices or structures, or a combination of other known devices and structures, to perform the functions described herein.

The controller 30 may include a central processing unit (CPU) as the processor, for example. The storage 33 may include a non-transitory recording medium that can be read by the CPU of the controller 30, such as a read only memory (ROM) and a random access memory (RAM). The storage 33 stores a program 330 and the like for controlling the data processing apparatus 3, for example. Various functions of the controller 30 are implemented by the CPU of the controller 30 executing the program 330 in the storage 33, for example.

Note that the configuration of the controller 30 is not limited to the example described above. For example, the controller 30 may include a plurality of CPUs. The controller 30 may include at least one digital signal processor (DSP). All of the functions of the controller 30 or a part of the functions of the controller 30 may be implemented by a hardware circuit that does not require software to implement the functions. The storage 33 may include a computer-readable non-transitory recording medium, other than the ROM and the RAM. For example, the storage 33 may include a small-sized hard disk drive, a solid state drive (SSD), or the like.

### <Configuration Example of Sensor Apparatus>

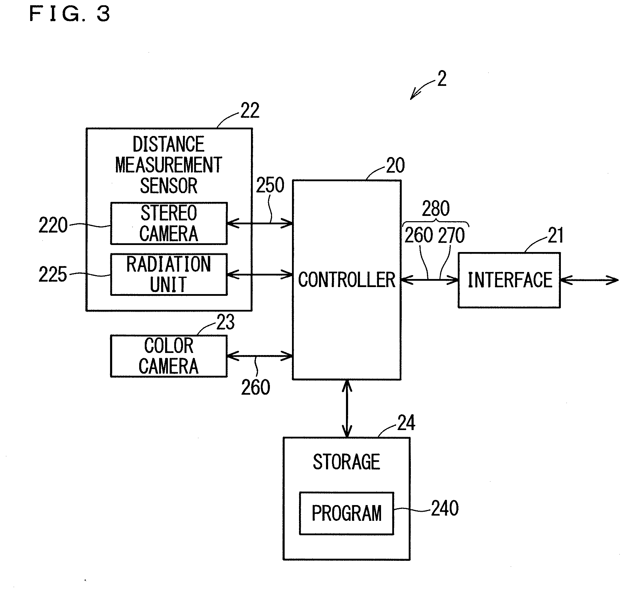

FIG. 3 is a schematic diagram illustrating one example of a configuration of the sensor apparatus 2. As illustrated in FIG. 3, the sensor apparatus 2 includes, for example, a controller 20, an interface 21, a distance measurement sensor 22, a color camera 23, and a storage 24. It can also be said that the sensor apparatus 2 is a sensor circuit, for example.

The interface 21 can communicate with the first interface 31 of the data processing apparatus 3. It can also be said that the interface 21 is an interface circuit, for example. It can also be said that the interface 21 is a communication unit or a communication circuit. The interface 21 includes a configuration similar to that of the first interface 31, for example.

The controller 20 can integrally manage operations of the sensor apparatus 2 by controlling other constituent elements of the sensor apparatus 2. It can also be said that the controller 20 is a control circuit, for example. As will be described in further detail below, the controller 20 includes at least one processor in order to provide control and processing capabilities for executing various functions. The above description relating to the at least one processor included in the controller 30 is also applicable to at least one processor included in the controller 20.

The controller 20 may include a CPU as the processor, for example. The storage 24 may include a non-transitory recording medium that can be read by the CPU of the controller 20, such as a ROM and a RAM. The storage 24 stores a program 240 and the like for controlling the sensor apparatus 2, for example. Various functions of the controller 20 are implemented by the CPU of the controller 20 executing the program 240 in the storage 24, for example.

Note that the configuration of the controller 20 is not limited to the example described above. For example, the controller 20 may include a plurality of CPUs. The controller 20 may include at least one DSP. All of the functions of the controller 20 or a part of the functions of the controller 20 may be implemented by a hardware circuit that does not require software to implement the functions. Similarly to the storage 33, the storage 24 may include a computer-readable non-transitory recording medium, other than the ROM and the RAM.

The distance measurement sensor 22 is a sensor for acquiring distance information to the measurement point in the measurement space, and includes, for example, a stereo camera 220 and a radiation unit 225. The controller 20 acquires the distance information to the measurement point in the measurement space, based on detection results in the distance measurement sensor 22.

The radiation unit 225 radiates an infrared pattern in the measurement space under control of the controller 20, for example. Under control of the controller 20, the stereo camera 220 captures an image of the measurement space when the radiation unit 225 radiates the infrared pattern. The stereo camera 220 can capture an image of the object in the measurement space and also the infrared pattern (also referred to as a projected pattern) projected on the object. The stereo camera 220 includes a left camera and a right camera. Each of the left camera and the right camera includes an image sensor and a lens, for example. In each of the left camera and the right camera, light enters an image sensor through the lens. The image sensor includes a plurality of sensor cells (also referred to as pixel parts) arrayed in a matrix pattern, for example. Each of the left camera and the right camera generates image data 250 representing an image in which the measurement space appears, and outputs the image data 250.

Under control of the controller 20, the color camera 23 captures a color image of the measurement space when the radiation unit 225 does not radiate the infrared pattern. The color camera 23 includes an image sensor and a lens, for example. In the color camera 23, light enters an image sensor through the lens. The image sensor includes a plurality of sensor cells arrayed in a matrix pattern, for example. The color camera 23 generates color image data 260 representing a color image in which the measurement space appears, and outputs the color image data 260. A plurality of pixels constituting the color image represented by the color image data 260 respectively include a plurality of measurement points.

The color image data 260 is data that two-dimensionally represents the color information of the measurement point in the measurement space. The color image data 260 includes pixel values of the plurality of pixels constituting the color image represented thereby. A pixel value of a certain pixel is the color information of the measurement point appeared in the certain pixel. It can also be said that the pixel value of the certain pixel is the color information of the measurement point corresponding to the certain pixel. The color information of the measurement point is information representing a color of the measurement point. The color of the measurement point is represented by the three primary colors of light, for example. The pixel value, i.e., the color information, includes an R component (red component), a G component (green component), and a B component (blue component), for example. Such color image data 260 is also referred to as RGB image data. The color camera 23 is also referred to as an RGB camera 23. In the color image data 260, regarding each of the plurality of pixels constituting the color image represented thereby, pixel position information representing a position of the pixel and a pixel value of the pixel (i.e., the color information) are associated with each other.

The color image data 260 generated in the color camera 23 is input to the controller 20. The controller 20 performs filter processing on the input color image data 260, for example, and inputs the color image data 260 to the interface 21.

The controller 20 generates distance image data 270 representing a distance image, based on the image data 250 output from the two cameras included in the stereo camera 220. The plurality of pixels constituting the distance image respectively correspond to the plurality of measurement points appeared in the plurality of pixels constituting the image captured by one of the cameras of the stereo camera 220. The distance image data 270 includes the pixel values of the plurality of pixels constituting the distance image. A pixel value of a certain pixel included in the distance image is the distance information representing the distance to the measurement point corresponding to the certain pixel. It can be said that the distance image data 270 is data that two-dimensionally represents the distance information to the measurement point in the measurement space. In the distance image data 270, regarding each of the plurality of pixels constituting the distance image represented thereby, the pixel position information representing a position of the pixel and the distance information being a pixel value of the pixel are associated with each other.

The controller 20 inputs the generated distance image data 270 and the color image data 260 subjected to the filter processing to the interface 21 as an image data set 280. The interface 21 transmits the input image data set 280 to the data processing apparatus 3.

The number of the plurality of measurement points respectively corresponding to a plurality of pieces of color information included in the color image data 260 matches the number of the plurality of measurement points respectively corresponding to a plurality of pieces of distance information included in the distance image data 270. The color information of a pixel at a certain pixel position included in the color image data 260 and the distance information of the pixel at the same pixel position as the certain pixel position included in the distance image data 270 correspond to the same measurement point. In other words, the color information of a certain measurement point included in the color image data 260 and the distance information to the certain measurement point included in the distance image data 270 correspond to the pixel at the same pixel position.

In the description below, the following expression is used that certain color information included in the color image data 260 and distance information of the pixel at the same pixel position as the pixel position corresponding to the certain color information included in the distance image data 270 correspond to each other. In other words, the following expression is used that the color information of a certain measurement point and the distance information to the certain measurement point correspond to each other.

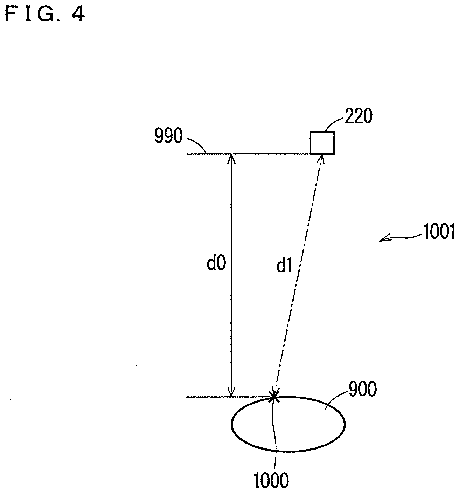

FIG. 4 is a schematic diagram for illustrating one example of the distance information included in the distance image data 270. FIG. 4 illustrates a measurement point located on a surface of an object 900 in a measurement space 1000 as one example of a measurement point 1001 in the measurement space 1000. The term "distance information" by itself hereinafter refers to the distance information included in the distance image data 270.

The distance information is information representing the distance from the stereo camera 220 to the measurement point 1001, for example. The distance information may be information representing the distance from the stereo camera 220 to the measurement point 1001 along a specific direction, for example. In this case, the distance information may be information representing a distance d0 (also referred to as a specific direction distance d0) from the stereo camera 220 to the measurement point 1001 along a direction perpendicular to a reference straight line 990 connecting the two cameras included in the stereo camera 220, for example. It can also be said that the specific direction distance d0 is a distance from the reference straight line 990 to the measurement point 1001 along the direction perpendicular to the reference straight line 990. The reference straight line 990 may be a line connecting the centers of imaging surfaces of the image sensors of the two cameras included in the stereo camera 220, for example. The specific direction distance d0 can be calculated using parallax between the two cameras included in the stereo camera 220 (also referred to as inter-camera parallax), a distance between the two cameras (also referred to as an inter-camera distance), and a focal length of the two cameras, based on the principle of triangulation, for example. The inter-camera distance and the focal length are known values. The controller 20 identifies the inter-camera parallax, based on the image data 250 output from the two cameras included in the stereo camera 220. Then, the controller 20 can calculate the specific direction distance d0, using the identified inter-camera parallax and the known inter-camera distance and focal length.

It can also be said that the specific direction distance d0 is a depth of the measurement point 1001 in the measurement space 1000 when seen from the stereo camera 220. The distance information representing the specific direction distance d0 is also referred to as depth information. The distance image data 270 including the distance information representing the specific direction distance d0 is also referred to as depth image data. The distance image represented by the distance image data 270 including the distance information representing the specific direction distance d0 is also referred to as a depth image.

Note that the distance information may be information representing a direct distance d1 (see FIG. 4) from the stereo camera 220 to the measurement point 1001. For example, the direct distance d1 may be a direct distance from the midpoint between the two cameras included in the stereo camera 220 to the measurement point 1001, or may be a direct distance from one of the two cameras to the measurement point 1001. The direct distance d1 can be calculated based on the specific direction distance d0, performance of the stereo camera 220, and the like, for example.

### <Operation Example of Data Processing Apparatus>

The controller 30 of the data processing apparatus 3 according to Embodiment 1 can convert at least a part of the distance image data 270 output from the sensor apparatus 2 to point cloud data including coordinate information of the measurement point in the measurement space. The point cloud data is data representing a point cloud (also referred to as a measurement point cloud) being a set of the plurality of measurement points in the measurement space. It can also be said that the point cloud data is data representing the object in the measurement space, using a plurality of points. The point cloud data is also data representing a surface shape of the object in the measurement space. The point cloud data includes the coordinate information representing the positions of the points on the surface of the object in the measurement space. The distance between two measurement points included in the point cloud is an actual distance in the measurement space, for example.

The controller 30 can also convert at least a part of the distance image data 270 to point cloud data together with at least a part of the color image data 260. In other words, the controller 30 can also convert at least a part of the image data set 280 consisting of the distance image data 270 and the color image data 260 to point cloud data. The controller 30 converts at least a part of the distance image data 270 together with at least a part of the color image data 260 including a plurality of pieces of color information respectively corresponding to a plurality of pieces of distance information included in at least the part thereof to point cloud data. In such a case, the point cloud data includes the coordinate information and the color information of the measurement point in the measurement space. The point cloud data is also data representing the surface shape and the color of the object in the measurement space. The point cloud data includes the coordinate information representing the positions of the points on the surface of the object in the measurement space and the color information representing the colors of the points.

The target data to be converted to the point cloud data may be hereinafter referred to as point cloud conversion target data. The point cloud conversion target data may be at least a part of the distance image data 270 or at least a part of the image data set 280. The point cloud conversion target data at least includes at least a part of the distance image data.

When the point cloud conversion target data is converted to point cloud data, the measurement points increase due to complementation processing or the like. Thus, the number of the plurality of measurement points constituting the point cloud represented by the point cloud data is larger than the number of the plurality of measurement points respectively corresponding to the plurality of pieces of distance information included in the point cloud conversion target data. For example, when all the distance image data 270 is converted to point cloud data, the number of the plurality of measurement points constituting the point cloud represented by the point cloud data is larger than the number of the plurality of measurement points respectively corresponding to the plurality of pieces of distance information included in the distance image data 270. When all of the distance image data 270 is converted to point cloud data together with all the color image data 260 (i.e., when all the image data set 280 is converted to point cloud data), the number of the plurality of measurement points constituting the point cloud represented by the point cloud data is larger than the number of the plurality of measurement points respectively corresponding to the plurality of pieces of color information included in the color image data 260.

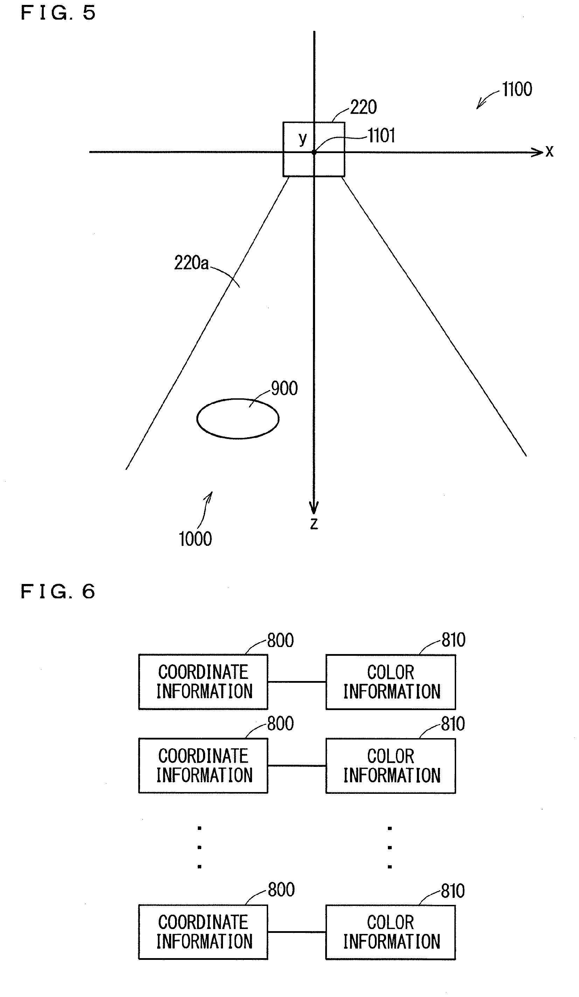

The positions of the plurality of measurement points constituting the point cloud are represented by the coordinate information in a three-dimensional orthogonal coordinate system 1100 set to include the measurement space. FIG. 5 is a schematic diagram illustrating one example of the three-dimensional orthogonal coordinate system 1100 (also simply referred to as a coordinate system 1100). FIG. 5 schematically illustrates a visual field range 220a of the stereo camera 220. The measurement space 1000 is included in the visual field range 220a.

An origin 1101 of the coordinate system 1100 is set in the stereo camera 220, for example. For example, the origin 1101 may be set to the midpoint between the two cameras included in the stereo camera 220, or may be set to another position. For example, the z-axis of the coordinate system 1100 is set to be parallel with an optical axis direction of the stereo camera 220, with the positive side facing a depth side of the visual field range 220a (i.e., a depth side of the measurement space 1000 when seen from the stereo camera 220). It can be said that a z-coordinate value of the coordinate system 1100 is a coordinate value of the measurement space 1000 in a depth direction. Regarding the z-coordinate value, as the value is larger on a further depth side of the measurement space 1000. The x-axis of the coordinate system 1100 is set to be perpendicular to the z-axis of the coordinate system 1100, and the y-axis of the coordinate system 1100 is set to be perpendicular to the x-axis and the z-axis of the coordinate system 1100.

FIG. 6 is a schematic diagram illustrating one example of the point cloud data when the point cloud conversion target data is at least a part of the image data set 280. As illustrated in FIG. 6, for example, the point cloud data includes coordinate information 800 in the coordinate system 1100 regarding the measurement points in the measurement space and color information 810. In the point cloud data, regarding each measurement point, the coordinate information 800 of the measurement point and the color information 810 of the measurement point are associated with each other. In the point cloud data, regarding each point constituting the point cloud, the coordinate information 800 of the point and the color information 810 of the point are associated. It can be said that, in the point cloud data, regarding each of the plurality of points on the surface of the object in the measurement space, the coordinate information 800 representing the position of the point and the color information 810 representing the color of the point are included. The coordinate information 800 includes an x-coordinate value, a y-coordinate value, and a z-coordinate value of the coordinate system 1100. The color information 810 includes an R component, a G component, and a B component. The controller 30 generates a plurality of pieces of coordinate information 800 included in the point cloud data, based on at least a part of the distance image data 270 included in the point cloud conversion target data and performance parameters of the stereo camera 220 such as a size of the image sensor, an angle of view, and a focal length. The controller 30 generates a plurality of pieces of color information 810 included in the point cloud data, based on at least a part of the color image data 260 included in the point cloud conversion target data and performance parameters of the stereo camera 220 such as a size of the image sensor, an angle of view, and a focal length. The point cloud data as in FIG. 6 is also referred to as colored point cloud data.

Note that, when the point cloud conversion target data is at least a part of the distance image data 270, the color information 810 is not included in the point cloud data. In the point cloud data, information other than the color information 810 may be associated with the coordinate information 800. For example, with the coordinate information 800 of a certain measurement point, vector information representing a normal vector of the certain measurement point may be associated, or curvature information representing a curvature of the certain measurement point may be associated.

As described above, the point cloud data is generated based on at least a part of the distance image data 270. Regarding the distance information included in the point cloud conversion target data, as the distance (for example, the specific direction distance d0) represented thereby is larger, an error tends to be greater. This is because angular resolution of the stereo camera 220 and spatial resolution of the infrared pattern radiated by the radiation unit 225 are further reduced at a distance farther away from the distance measurement sensor 22. Consequently, regarding the coordinate information 800 included in the point cloud data generated based on at least a part of the distance image data 270, a noise component tends to be larger as the z-coordinate values included therein are larger.

When processing is performed on the plurality of pieces of coordinate information included in the point cloud data as above using common processing parameters, the processing may not be appropriately performed on the point cloud data. For example, a case is considered in which noise removal processing is performed on the plurality of pieces of coordinate information included in the point cloud data, using common processing parameters. In this case, when the processing parameters are adjusted to enhance a noise removal effect, the noise component can be appropriately removed regarding the coordinate information having a large noise component; however, regarding the coordinate information having a small noise component, the noise removal effect may be excessively high and thus necessary information may be removed from the coordinate information. In contrast, when the noise removal effect is reduced, regarding the coordinate information having a small noise component, the noise component can be appropriately removed; however, regarding the coordinate information having a large noise component, the noise removal effect may be inadequate and thus the noise component may not be sufficiently removed from the coordinate information.

In view of this, the controller 30 divides the point cloud conversion target data into a plurality of segment data depending on the distance information, and individually converts each segment data to the point cloud data. Then, the controller 30 performs individual processing on each obtained point cloud data. Consequently, the controller 30 can appropriately process each point cloud data depending on the z-coordinate values included therein, and can enhance accuracy of each point cloud data. Operation of the controller 30 will be described below in detail.

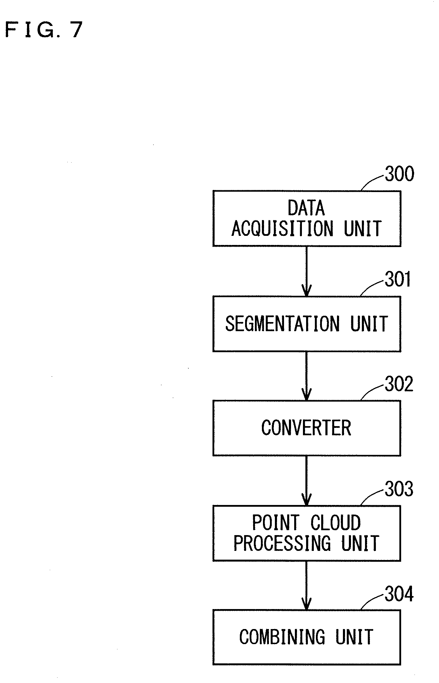

FIG. 7 is a schematic diagram illustrating one example of a plurality of functional blocks formed in the controller 30 by the controller 30 executing the program 330. As the functional blocks, for example, the controller 30 includes a data acquisition unit 300, a segmentation unit 301, a converter 302, a point cloud processing unit 303, and a combining unit 304. Note that all of the functions of the data acquisition unit 300 or a part of the functions of the data acquisition unit 300 may be implemented by a hardware circuit that does not require software to implement the functions. The same applies to the converter 302, the point cloud processing unit 303, and the combining unit 304.

The data acquisition unit 300 performs acquisition processing of acquiring at least the distance image data 270 out of the image data set 280 from the sensor apparatus 2 via the first interface 31. Here, in the acquisition processing, the data acquisition unit 300 acquires the distance image data 270 and the color image data 260 from the sensor apparatus 2, for example. In other words, the data acquisition unit 300 acquires the image data set 280 from the sensor apparatus 2.

In the acquisition processing, the data acquisition unit 300 transmits image capturing start instruction information for giving notification of an instruction to start image capturing to the sensor apparatus 2 via the first interface 31, for example. In the sensor apparatus 2, when the controller 20 receives the image capturing start instruction information from the interface 21, the controller 20 controls the distance measurement sensor 22 and the color camera 23, and causes each of the stereo camera 220 and the color camera 23 to capture an image. Next, the controller 20 generates the distance image data 270, based on the image data 250 from the stereo camera 220, and performs processing on the color image data 260 from the color camera 23. Then, the controller 20 transmits the image data set 280 consisting of the distance image data 270 and the color image data 260 to the data processing apparatus 3 via the interface 21. In the data processing apparatus 3, the image data set 280 received by the first interface 31 from the sensor apparatus 2 is input to the controller 30. Consequently, in the acquisition processing, the data acquisition unit 300 can acquire the image data set 280 in response to transmission of the image capturing start instruction information.

The segmentation unit 301 performs segmentation processing of dividing at least a part of the distance image data 270 acquired at least in the acquisition processing to a plurality of segment data. Here, in the segmentation processing, for example, the segmentation unit 301 divides the image data set 280 acquired in the acquisition processing to a plurality of segment data.

In the segmentation processing, the segmentation unit 301 divides each of the distance image data 270 and the color image data 260 included in the image data set 280 to a plurality of segment data. In the segmentation processing, the distance image data 270 is divided into a plurality of distance image segment data, and the color image data 260 is divided into a plurality of color image segment data. As will be described later, one distance image segment data and one color image segment data constitute one segment data set. In the segmentation processing, the segmentation unit 301 divides the image data set 280 into a plurality of segment data sets. It can also be said that the segment data set is a type of segment data.

Regarding each segment data obtained in the segmentation processing, the converter 302 performs conversion processing of converting the segment data to point cloud data. In the conversion processing, for example, regarding each of the plurality of segment data sets obtained in the segmentation processing, the converter 302 converts the segment data set to point cloud data. The segment data set is the point cloud conversion target data.

Regarding each of the plurality of point cloud data obtained in the conversion processing, the point cloud processing unit 303 performs point cloud processing of performing predetermined processing on the point cloud data. The combining unit 304 performs combining processing of combining the plurality of point cloud data subjected to the point cloud processing.

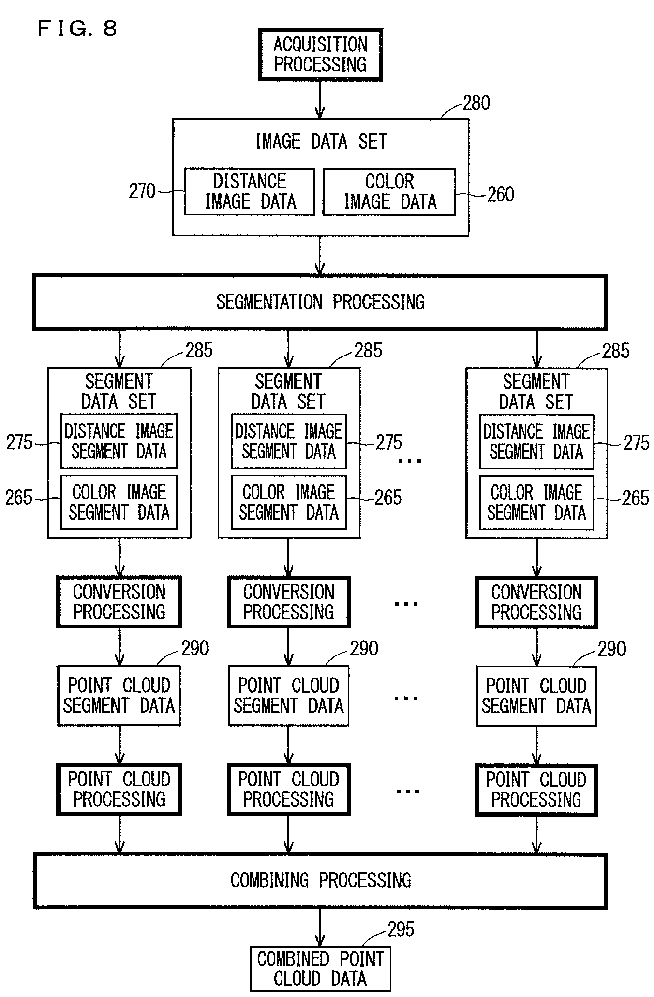

FIG. 8 is a schematic diagram illustrating one example of the point cloud generation processing in which the point cloud data is generated based on the data acquired in the sensor apparatus 2. The point cloud generation processing is performed by the controller 30. In the point cloud generation processing of the example of FIG. 8, one point cloud data is generated based on the image data set 280.

As illustrated in FIG. 8, in the point cloud generation processing, first, the acquisition processing is performed, and the image data set 280 is acquired from the sensor apparatus 2.

Next, the segmentation processing is performed on the image data set 280 acquired in the acquisition processing, and a plurality of segment data sets 285 are generated. In the segmentation processing, the distance image data 270 included in the acquired image data set 280 is divided into a plurality of distance image segment data 275 depending on the distance information. In the segmentation processing, the color image data 260 included in the acquired image data set 280 is divided into a plurality of color image segment data 265 depending on the distance information corresponding to the color information included therein.

In the segmentation processing, for example, a possible range of the distance indicated by the distance information is divided into N distance sections of from a first distance section to an N-th distance section (N is an integer of 2 or greater). Then, in the segmentation processing, the distance image data 270 is divided into N distance image segment data 275 respectively corresponding to the N distance sections, and the color image data 260 is divided into N color image segment data 265 respectively corresponding to the N distance sections.

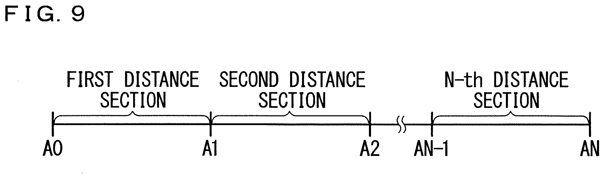

FIG. 9 is a schematic diagram illustrating one example of the first distance section to the N-th distance section. An n-th distance section (n is a variable and is an integer satisfying 1 ≤ n ≤ N) is a range of a distance An - 1 or more and less than the distance An, for example. Note that, exceptionally, the N-th distance section is a range of a distance AN - 1 or more and the distance AN or less. The distance An is larger than the distance An - 1. The distance A0 is a minimum value (for example, 0) of the possible range of the distance indicated by the distance information, for example. The distance AN is a maximum value of the possible range of the distance indicated by the distance information, for example. For example, the first distance section is a range of the distance A0 or more and less than a distance A1, and the second distance section is a range of the distance A1 or more and less than a distance A2.

The segmentation unit 301 includes the distance information indicating the distance included in the n-th distance section and the pixel position information associated with the distance information out of the distance image data 270 in the distance image segment data 275 corresponding to the n-th distance section. Consequently, the plurality of pieces of distance information included in one distance image segment data 275 indicate distances close to each other. The segmentation unit 301 includes the color information corresponding to the n-th distance section and the pixel position information associated with the color information out of the color image data 260 in the color image segment data 265 corresponding to the n-th distance section. Here, the color information corresponding to the n-th distance section included in the color image data 260 of a certain image data set 280 is the color information corresponding to the distance information indicating the distance included in the n-th distance section in the distance image data 270 of the certain image data set 280. The color information corresponding to the n-th distance section included in the color image data 260 is the color information corresponding to the same measurement point as the distance information indicating the distance included in the n-th distance section in the distance image data 270.

The segmentation unit 301 regards one distance image segment data 275 and one color image segment data 265 corresponding to the same distance section as one segment data set 285 corresponding to the distance section. In other words, the distance image segment data 275 and the color image segment data 265 corresponding to the n-th distance section constitute one segment data set 285 corresponding to the n-th distance section. In the segmentation processing, N segment data sets 285 respectively corresponding to the N distance sections are generated. In the segmentation processing, it can also be said that the image data set 280 is divided into N segment data sets 285 depending on the distance information. A plurality of distance image segment data 276 and a plurality of color image segment data 265 constitute a plurality of segment data sets 285 in which each set includes one distance image segment data and one color image segment data of the same distance section.

Note that the N distance sections may include a plurality of distance sections having different section lengths, or may include a plurality of distance sections having the same section length. For example, the length of the first distance section may be the same as or different from the length of the second distance section. Unlike the example of FIG. 9, the N distance sections need not be contiguous.

In the point cloud generation processing, after the segmentation processing is performed, the conversion processing of converting the segment data set 285 to point cloud data is performed. Regarding each of the N segment data sets 285 obtained in the segmentation processing, the converter 302 performs the conversion processing of converting the segment data set 285 to point cloud data 290 (also referred to as point cloud segment data 290). In the example of FIG. 8, the segment data set 285 is the point cloud conversion target data.

As illustrated in FIG. 6 described above, each point cloud segment data 290 includes a plurality of pieces of coordinate information 800 and a plurality of pieces of color information 810 respectively associated with the plurality of pieces of coordinate information 800. When the segment data set 285 is converted to the point cloud segment data 290, the measurement points increase due to complementation processing or the like. Thus, the number of the plurality of measurement points constituting the point cloud represented by the point cloud segment data 290 is larger than the number of the plurality of measurement points respectively corresponding to the plurality of pieces of distance information included in the distance image segment data 275, and is larger than the number of the plurality of measurement points respectively corresponding to the plurality of pieces of color information included in the color image segment data 265. The plurality of pieces of distance information included in one distance image segment data 275 indicate distances close to each other, and accordingly the z-coordinate values of the plurality of pieces of coordinate information 800 included in one point cloud segment data 290 generated based on one distance image segment data 275 are values close to each other.

The converter 302 may perform the conversion processing regarding at least two segment data sets 285 of the N segment data sets 285 in parallel, for example. In other words, the converter 302 may perform at least two conversion processings of a plurality of conversion processings of respectively converting the plurality of segment data sets 285 to the plurality of point cloud segment data 290 in parallel. Consequently, a processing time for obtaining the point cloud segment data 290 can be reduced. As illustrated in FIG. 8, the converter 302 may perform N conversion processings of respectively converting the N segment data sets 285 to N point cloud segment data 290 in parallel. The converter 302 may perform a plurality of conversion processings as a part of the N conversion processings in parallel. The converter 302 may sequentially perform at least two conversion processings of the N conversion processings in series. Regarding these parallel processing and series processing, the same applies to the conversion processing performed by the converter 302 to be described later. Regarding these parallel processing and series processing, the same applies to the point cloud processing performed by a converter 352 to be described later.

The point cloud segment data 290 obtained as a result of the conversion processing having been performed on the segment data set 285 corresponding to the n-th distance section is hereinafter referred to as the point cloud segment data 290 corresponding to the n-th distance section. The converter 302 generates N point cloud segment data 290 respectively corresponding to the first distance section to the N-th distance section.

The z-coordinate values of the plurality of pieces of coordinate information 800 included in the point cloud segment data 290 tend to indicate larger values as the distance section corresponding to the point cloud segment data 290 is larger. In other words, the z-coordinate values of the plurality of pieces of coordinate information 800 included in the point cloud segment data 290 corresponding to an (n+1)-th distance section tend to be larger than the z-coordinate values of the plurality of pieces of coordinate information 800 included in the point cloud segment data 290 corresponding to the n-th distance section.

In the point cloud generation processing, after the conversion processing is performed, the point cloud processing of performing predetermined processing on the point cloud segment data 290 is performed. The point cloud processing unit 303 individually performs the point cloud processing regarding each of the N generated point cloud segment data 290. In the point cloud processing, for example, the noise removal processing is performed on the point cloud segment data 290. Specifically, the noise removal processing is performed on the plurality of pieces of coordinate information 800 included in the point cloud segment data 290. As the noise removal processing, for example, a low-pass filter may be employed. The low-pass filter may be a low-pass filter using wavelet transform. As the noise removal processing, a bilateral filter may be employed, or a filter for removing a statistic noise may be employed. Note that the noise removal processing is not performed on the plurality of pieces of color information 810 included in the point cloud segment data 290.

The point cloud processing unit 303 may make the processing parameters different between processings for the N point cloud segment data 290, for example. For example, the point cloud processing unit 303 may make the processing parameters different between the noise removal processings for the N point cloud segment data 290. In this case, the point cloud processing unit 303 may make filter coefficients different between the noise removal processings for the N point cloud segment data 290, for example. Consequently, the noise removal effect can be made different between the noise removal processings for the N point cloud segment data 290, for example.

Here, as described above, regarding the coordinate information 800 included in the point cloud data, the noise component tends to be larger as the z-coordinate values included therein are larger. In contrast, the z-coordinate values of the plurality of pieces of coordinate information 800 included in the point cloud segment data 290 tend to indicate larger values as the distance section corresponding to the point cloud segment data 290 is larger. Consequently, regarding the coordinate information 800 included in the point cloud segment data 290, the noise component tends to be larger as the distance section corresponding to the point cloud segment data 290 is larger. In other words, in the coordinate information 800 included in the point cloud segment data 290 corresponding to the (n+1)-th distance section, the noise component tends to be larger than in the coordinate information 800 included in the point cloud segment data 290 corresponding to the n-th distance section.

In view of this, the point cloud processing unit 303 may make the filter coefficients different between the noise removal processings for the N point cloud segment data 290, and thereby increase the noise removal effect of the noise removal processings for the point cloud segment data 290 as the distance section corresponding to the point cloud segment data 290 is larger. For example, the point cloud processing unit 303 may increase the noise removal effect regarding the coordinate information 800 included in the point cloud segment data 290 corresponding to the (n+1)-th distance section further than the noise removal effect regarding the coordinate information 800 included in the point cloud segment data 290 corresponding to the n-th distance section. Consequently, the noise removal effect can be increased for the coordinate information 800 whose noise component tends to be large which is included in the point cloud segment data 290 with a large corresponding distance section, and the noise removal effect can be reduced for the coordinate information 800 whose noise component tends to be small which is included in the point cloud segment data 290 with a small corresponding distance section. Therefore, the noise removal processing can be appropriately performed on each point cloud segment data 290. As a result, accuracy of each point cloud segment data 290 can be enhanced.

Note that the point cloud processing unit 303 may make the processing parameters different between processings for at least two point cloud segment data 290 of the N point cloud segment data 290. In this case, appropriate processing can be performed on each of the at least two point cloud segment data 290.

For example, the point cloud processing unit 303 may perform the point cloud processing regarding at least two point cloud segment data 290 of the N point cloud segment data 290 in parallel. In this case, a processing time regarding at least two point cloud segment data 290 can be reduced. As illustrated in FIG. 8, the point cloud processing unit 303 may perform the point cloud processing regarding the N point cloud segment data 290 in parallel, or may perform the point cloud processing regarding a plurality of point cloud segment data 290 as a part of the N point cloud segment data 290 in parallel. The point cloud processing unit 303 may sequentially perform the point cloud processing regarding at least two point cloud segment data 290 of the N point cloud segment data 290 in series. Regarding these parallel processing and series processing, the same applies to the point cloud processing performed by the point cloud processing unit 303 to be described later. Regarding these parallel processing and series processing, the same applies to the point cloud processing performed by a point cloud processing unit 353 to be described later.

In the point cloud generation processing, after the point cloud processing is performed, the combining processing of combining the N point cloud segment data 290 is performed. In the combining processing, the combining unit 304 combines the N point cloud segment data 290 subjected to the point cloud processing and generates one point cloud data 295 (also referred to as combined point cloud data 295). In the combining processing, the combining unit 304 may simply collect and output the N point cloud segment data 290 subjected to the point cloud processing as one combined point cloud data 295, for example.

As in the above description, in the point cloud generation processing, the data processing apparatus 3 generates the point cloud data 295, based on the distance image data 270 and the color image data 260 obtained in the sensor apparatus 2. It can also be said that the data processing apparatus 3 converts the distance image data 270 to the point cloud data 295 together with the color image data 260. In the point cloud data 295, the plurality of pieces of coordinate information 800 and the plurality of pieces of color information 810 are associated on a one-to-one basis. The point cloud data 295 is also referred to as colored point cloud data.

The controller 30 may transmit the point cloud data (in the above example, the combined point cloud data 295) finally obtained in the point cloud generation processing to the external apparatus via the second interface 32. The external apparatus may perform processing based on the received point cloud data. The display apparatus included in the external apparatus may display the received point cloud data. For example, the external apparatus may generate polygon data from the received point cloud data, or may generate computer-aided design (CAD) data from the generated polygon data. The controller 30 may generate the polygon data from the point cloud data generating the point cloud generation processing, or may generate CAD data from the generated polygon data.

Note that, when the measurement system 1 includes a plurality of sensor apparatuses 2 that capture images of the measurement space at angles different from each other, in the point cloud generation processing, the controller 30 of the data processing apparatus 3 may generate a plurality of point cloud data 295, based on a plurality of image data sets 280 respectively output by the plurality of sensor apparatuses 2. Then, in the point cloud generation processing, the controller 30 may combine the plurality of generated point cloud data 295 and generate one point cloud data as an atlas, for example.

In the above example, although the distance image data 270 is converted to point cloud data together with the color image data 260, only the distance image data 270 may be converted to point cloud data. In this case, the sensor apparatus 2 need not include the color camera 23, and may include the color camera 23.

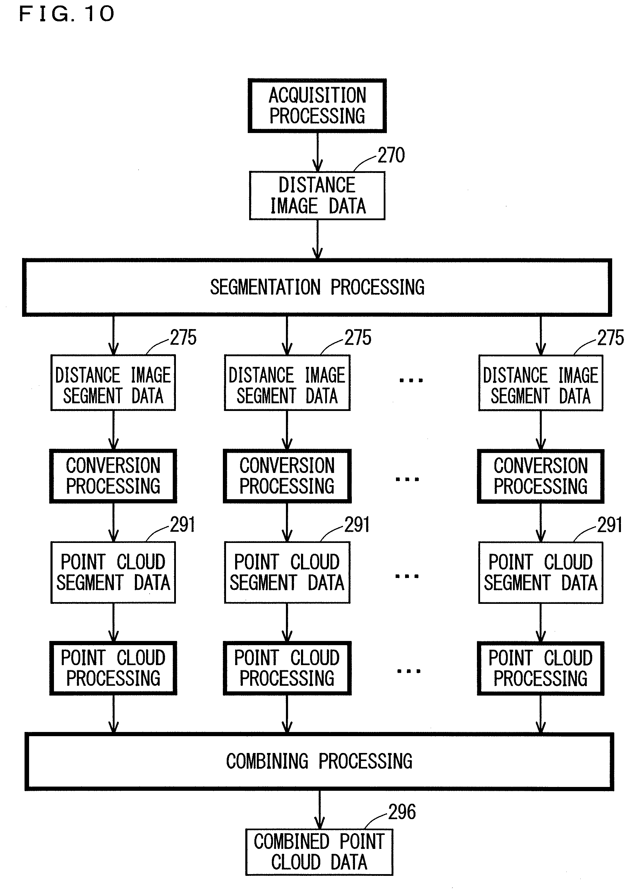

FIG. 10 is a schematic diagram illustrating one example of the point cloud generation processing in which the point cloud data is generated based only on the distance image data 270. In the example of FIG. 10, in the acquisition processing, the data acquisition unit 300 acquires the distance image data 270 from the sensor apparatus 2. Next, in the segmentation processing, the segmentation unit 301 divides the distance image data 270 acquired in the acquisition processing into a plurality of distance image segment data 275 depending on the distance information. Here, for example, similarly to the above, the distance image data 270 is divided into N distance image segment data 275. Note that the data acquisition unit 300 may acquire both of the distance image data 270 and the color image data 260 from the sensor apparatus 2, and the segmentation unit 301 may divide only the distance image data 270 out of the acquired distance image data 270 and color image data 260 into a plurality of segment data.

After the segmentation processing, regarding each of the N distance image segment data 275 obtained in the segmentation processing, the converter 302 performs the conversion processing of converting the distance image segment data 275 to point cloud data 291 (also referred to as point cloud segment data 291). In the example of FIG. 10, the distance image segment data 275 is the point cloud conversion target data.

The point cloud data 291 includes the coordinate information 800 but does not include the color information 810. Similarly to the above point cloud segment data 290, the number of the plurality of measurement points constituting the point cloud represented by the point cloud segment data 291 is larger than the number of the plurality of measurement points respectively corresponding to the plurality of pieces of distance information included in the distance image segment data 275. The z-coordinate values of the plurality of pieces of coordinate information 800 included in one point cloud segment data 291 are values close to each other.

The point cloud segment data 291 obtained as a result of the conversion processing having been performed on the distance image segment data 275 corresponding to the n-th distance section is hereinafter referred to as the point cloud segment data 291 corresponding to the n-th distance section. Similarly to the point cloud segment data 290, the z-coordinate values of the plurality of pieces of coordinate information 800 included in the point cloud segment data 291 tend to indicate larger values as the distance section corresponding to the point cloud segment data 291 is larger.

After the conversion processing is performed, the point cloud processing unit 303 individually performs the point cloud processing similar to the above regarding each of the N generated point cloud segment data 291. Similarly to the point cloud segment data 290, the point cloud processing unit 303 may make the processing parameters different between at least two point cloud segment data 291 of the N point cloud segment data 291, for example. For example, the point cloud processing unit 303 may make the filter coefficients different between the noise removal processings for the N point cloud segment data 291, and thereby increase the noise removal effect of the noise removal processings for the point cloud segment data 291 as the distance section corresponding to the point cloud segment data 291 is larger. Consequently, the noise removal effect can be increased for the coordinate information 800 whose noise component tends to be large which is included in the point cloud segment data 291 with a large corresponding distance section, and the noise removal effect can be reduced for the coordinate information 800 whose noise component tends to be small which is included in the point cloud segment data 291 with a small corresponding distance section. Therefore, the noise removal processing can be appropriately performed on each point cloud segment data 291.

After the point cloud processing is performed, in the combining processing, the combining unit 304 combines the N point cloud segment data 291 subjected to the point cloud processing and generates one point cloud data 296 (also referred to as combined point cloud data 296). The combined point cloud data 296 includes the coordinate information 800 but does not include the color information 810.

As described above, in the data processing apparatus 3, the distance image data 270 is divided into a plurality of distance image segment data 275 depending on the distance information. Then, each of the plurality of distance image segment data 275 is individually converted to point cloud data. Consequently, each point cloud data can be appropriately processed depending on the distance section corresponding thereto. The distance section corresponding to the point cloud data corresponds to the z-coordinate values included in the point cloud data, and thus each point cloud data can be appropriately processed depending on the z-coordinate values included therein. As a result, accuracy of each point cloud data can be enhanced. Therefore, accuracy of the combined point cloud data can be enhanced.

In the example of FIG. 8, not only the distance image data 270 but also the color image data 260 is divided into a plurality of color image segment data 265 depending on the distance information. The distance image segment data 275 is converted to point cloud data together with the color image segment data 265. Consequently, the point cloud data in which the coordinate information 800 and the color information 810 are appropriately associated can be obtained. In the point cloud data, the coordinate information 800 and the color information 810 are associated, and thus even when the point cloud processing is performed regarding the point cloud data, correspondence between the coordinate information 800 and the color information 810 can be appropriately maintained.

Note that, as can be understood from the description above, as the number of divisions of the distance image data 270 and the color image data 260 is larger, that is, as the value of N is larger, finer point cloud processing (for example, noise removal processing) can be performed. Accordingly, as the value of N is larger, accuracy of the combined point cloud data can be further enhanced. The value of N may be set depending on the accuracy of the combined point cloud data required by a user. The value of N may be determined based on a measurement environment, or may be set based on properties of lenses of the stereo camera 220 and the color camera 23.

### Embodiment 2

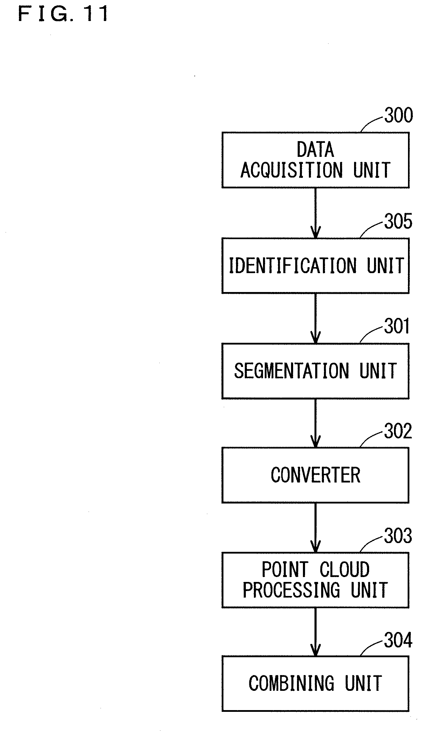

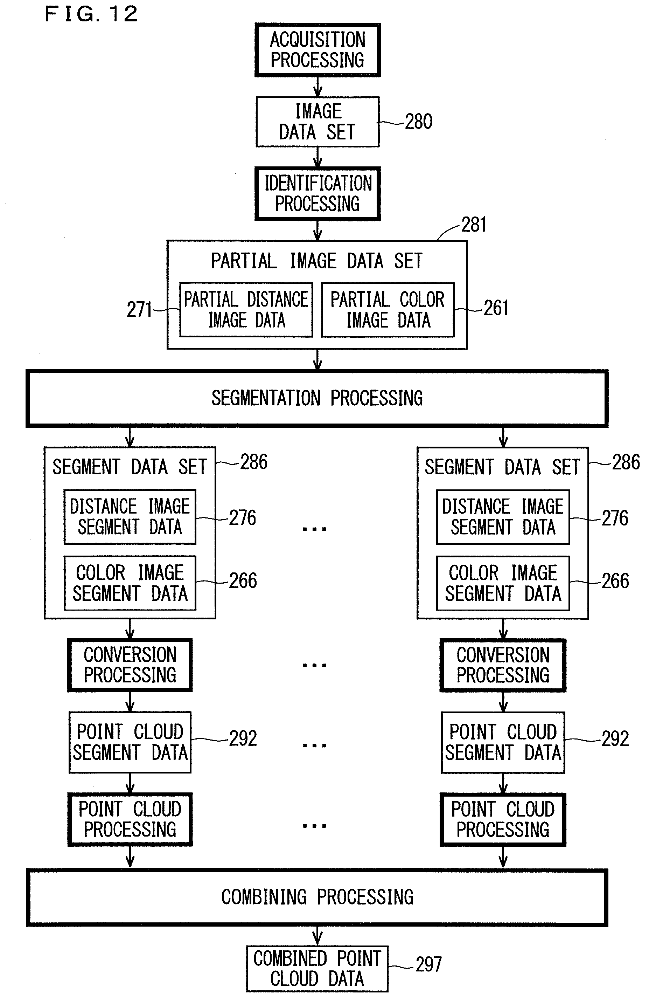

FIG. 11 is a schematic diagram illustrating one example of a configuration of the controller 30 of the data processing apparatus 3 included in the measurement system 1 according to Embodiment 2. FIG. 12 is a schematic diagram illustrating one example of the point cloud generation processing according to Embodiment 2. The measurement system 1 according to Embodiment 2 includes a configuration similar to that of the measurement system 1 according to Embodiment 1 described above. In comparison to the measurement system 1 according to Embodiment 1, the measurement system 1 according to Embodiment 2 is different only in the operation of the controller 30 of the data processing apparatus 3. For example, the controller 30 according to Embodiment 2 generates point cloud data representing a specific object in the measurement space, based on data acquired in the sensor apparatus 2. In Embodiment 2, high-accuracy point cloud data representing the specific object in the measurement space can be obtained.

As illustrated in FIG. 11, as the functional blocks, the controller 30 according to Embodiment 2 includes an identification unit 305, in addition to the data acquisition unit 300, the segmentation unit 301, the converter 302, the point cloud processing unit 303, and the combining unit 304 described above. Note that all of the functions of the identification unit 305 or a part of the functions of the identification unit 305 may be implemented by a hardware circuit that does not require software to implement the functions.

In at least the distance image data 270 acquired in the data acquisition unit 300, the identification unit 305 performs identification processing of identifying data related to the specific object in the measurement space. In the identification processing, the identification unit 305 identifies the data related to the specific object in the image data set 280, for example. Specifically, as illustrated in FIG. 12, in the identification processing, the identification unit 305 identifies partial distance image data 271 including the distance information related to the specific object in the distance image data 270. In the identification processing, the identification unit 305 identifies partial color image data 261 including the color information related to the specific object in the color image data 260. The partial distance image data 271 includes the distance information to each measurement point on the surface of the specific object and the pixel position information associated with the distance information. The partial color image data 261 includes the color information of each measurement point on the surface of the specific object and the pixel position information associated with the color information. The partial distance image data 271 and the partial color image data 261 identified in the identification processing may be hereinafter collectively referred to as a partial image data set 281.

The specific object includes at least one object in the measurement space. For example, the specific object may be determined depending on a purpose (i.e., a system) in which the measurement system 1 is used. For example, when the measurement system 1 is used for inspection of piping in an industry, the piping in the measurement space may be set to the specific object. When the measurement system 1 is used for control of a robot that holds an object, the object to be held by the robot in the measurement space may be set to the specific object. When the measurement system 1 is used for recognition of a vehicle on a road, the vehicle in the measurement space may be set to the specific object. The specific object may include a plurality of objects of the same type, or may include a plurality of objects of different types.

In the data processing apparatus 3 according to Embodiment 2, for example, the storage 33 stores feature information (also referred to as feature values) representing features of the specific object. The identification unit 305 can identify the partial distance image data 271 and the partial color image data 261, based on the feature information in the storage 33. For example, the feature information may include information representing the color of the specific object, or may include information representing the shape of the specific object. When the position of the specific object is fixed, the feature information may include information indicating the position appearing the specific object in the color image data 260.

In the point cloud generation processing according to Embodiment 2, as illustrated in FIG. 12, after the identification processing, the segmentation processing is performed. In the segmentation processing, the partial image data set 281 is divided into a plurality of segment data depending on the distance information. Similarly to a case in which the distance image data 270 is divided, the segmentation unit 301 divides the partial distance image data 271 into N distance image segment data 276 depending on the distance information. Similarly to a case in which the color image data 260 is divided, the segmentation unit 301 divides the partial color image data 261 into N color image segment data 266 depending on the distance information. The segmentation unit 301 regards one distance image segment data 276 and one color image segment data 266 corresponding to the same distance section as one segment data set 286 corresponding to the distance section. In the segmentation processing, N segment data sets 286 respectively corresponding to the N distance sections are generated. The plurality of pieces of distance information included in one distance image segment data 276 indicate distances close to each other.

After the segmentation processing, similarly to a case in which the segment data set 285 is converted to the point cloud data 290, regarding each of the N segment data sets 286 obtained in the segmentation processing, the converter 302 performs the conversion processing of converting the segment data set 286 into point cloud data 292 (also referred to as point cloud segment data 292). In the example of FIG. 12, the segment data set 286 is the point cloud conversion target data. The point cloud segment data 292 obtained as a result of the conversion processing having been performed on the segment data set 286 corresponding to the n-th distance section is hereinafter referred to as the point cloud segment data 292 corresponding to the n-th distance section.

The converter 302 generates N point cloud segment data 292 respectively corresponding to the N distance sections. The z-coordinate values of the plurality of pieces of coordinate information 800 included in one point cloud segment data 292 are values close to each other. Similarly to the point cloud segment data 290, the z-coordinate values of the plurality of pieces of coordinate information 800 included in the point cloud segment data 292 tend to indicate larger values as the distance section corresponding to the point cloud segment data 292 is larger.

After the conversion processing is performed, the point cloud processing unit 303 individually performs the point cloud processing similar to the above regarding each of the N generated point cloud segment data 292. Similarly to the point cloud segment data 290, the point cloud processing unit 303 may make the processing parameters different between at least two point cloud segment data 292 of the N point cloud segment data 292, for example. For example, the point cloud processing unit 303 may make the filter coefficients different between the noise removal processings for the N point cloud segment data 292, and thereby increase the noise removal effect of the noise removal processings for the point cloud segment data 292 as the distance section corresponding to the point cloud segment data 292 is larger. Consequently, the noise removal processing can be appropriately performed on each point cloud segment data 292.

For example, the point cloud processing unit 303 may perform the point cloud processing regarding at least two point cloud segment data 292 of the N point cloud segment data 292 in parallel. The point cloud processing unit 303 may sequentially perform the point cloud processing regarding at least two point cloud segment data 292 of the N point cloud segment data 292 in series.

After the point cloud processing is performed, in the combining processing, the combining unit 304 combines the N point cloud segment data 292 subjected to the point cloud processing and generates one point cloud data 297 (also referred to as combined point cloud data 297). The combined point cloud data 297 is data representing the specific object in the measurement space, using a plurality of points. The combined point cloud data 297 is also data representing the surface shape and the color of the specific object.

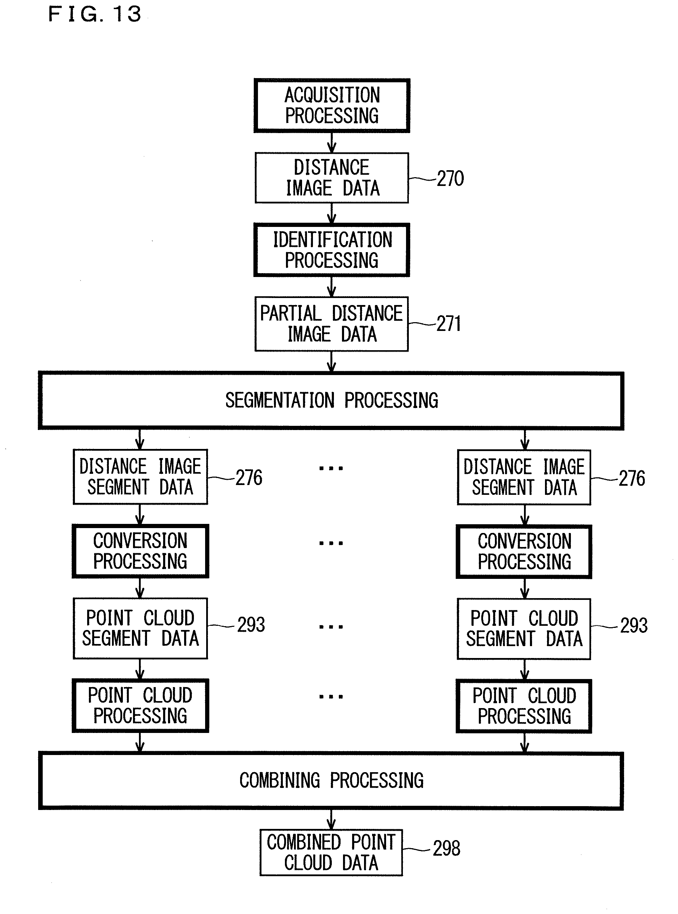

In the example of FIG. 12, although a part of the distance image data 270 is converted to point cloud data together with a part of the color image data 260, only a part of the distance image data 270 may be converted to point cloud data. FIG. 13 is a schematic diagram illustrating one example of the point cloud generation processing in which the point cloud data is generated based only on a part of the distance image data 270.

In the example of FIG. 13, similarly to the example of FIG. 10, in the acquisition processing, the data acquisition unit 300 acquires the distance image data 270 from the sensor apparatus 2. Next, in the identification processing, the identification unit 305 identifies the partial distance image data 271 including the distance information related to the specific object in the distance image data 270. Next, in the segmentation processing, similarly to the above, the segmentation unit 301 divides the partial distance image data 271 into N distance image segment data 276 depending on the distance information.

After the segmentation processing, similarly to the example of FIG. 10, regarding each of the N distance image segment data 276 obtained in the segmentation processing, the converter 302 performs the conversion processing of converting the distance image segment data 276 to point cloud data 293 (also referred to as point cloud segment data 293). In the example of FIG. 13, the distance image segment data 276 is the point cloud conversion target data. The point cloud data 293 includes the coordinate information 800 but does not include the color information 810. The z-coordinate values of the plurality of pieces of coordinate information 800 included in one point cloud segment data 293 are values close to each other.

The point cloud segment data 293 obtained as a result of the conversion processing having been performed on the distance image segment data 276 corresponding to the n-th distance section is hereinafter referred to as the point cloud segment data 293 corresponding to the n-th distance section. Similarly to the point cloud segment data 290, the z-coordinate values of the plurality of pieces of coordinate information 800 included in the point cloud segment data 293 tend to indicate larger values as the distance section corresponding to the point cloud segment data 293 is larger.

After the conversion processing is performed, the point cloud processing unit 303 individually performs the point cloud processing similar to the above regarding each of the N generated point cloud segment data 293. After the point cloud processing is performed, in the combining processing, the combining unit 304 combines the N point cloud segment data 293 subjected to the point cloud processing and generates one point cloud data 298 (also referred to as combined point cloud data 298). The combined point cloud data 298 includes the coordinate information 800 but does not include the color information 810. Similarly to the combined point cloud data 297, the combined point cloud data 298 is data representing the specific object in the measurement space, using a plurality of points. It can also be said that the combined point cloud data 298 is data representing the surface shape of the specific object.

As described above, in Embodiment 2, not all but a part of the distance image data 270 is divided into a plurality of distance image segment data 276 depending on the distance information. Then, each of the plurality of distance image segment data 276 is individually converted to point cloud data. Consequently, similarly to Embodiment 1, each point cloud data can be appropriately processed depending on the distance section corresponding thereto. As a result, for example, high-accuracy point cloud data representing the specific object in the measurement space can be obtained.

Note that, in the point cloud generation processing performed by the controller 30, regarding each of the plurality of specific objects, the segmentation processing, the conversion processing, and the point cloud processing may be individually performed. For example, regarding each of the plurality of partial image data sets 281 respectively corresponding to the plurality of specific objects, the segmentation processing, the conversion processing, and the point cloud processing may be individually performed. The partial image data set 281 corresponding to a certain specific object is the partial image data set 281including partial distance image data 271 including the distance information related to the certain specific object and the partial color image data 261 including the color information related to the certain specific object. The controller 30 may individually perform the segmentation processing, the conversion processing, and the point cloud processing regarding each of the plurality of partial distance image data 271 respectively corresponding to the plurality of specific objects. The partial distance image data 271 corresponding to the certain specific object is the partial distance image data 271 including the distance information related to the certain specific object.

The following will describe the point cloud processing of a case in which the segmentation processing, the conversion processing, and the point cloud processing are individually performed regarding each of a first specific object and a second specific object as one example of a case in which the segmentation processing, the conversion processing, and the point cloud processing are individually performed regarding each of the plurality of specific objects. Note that the segmentation processing, the conversion processing, and the point cloud processing may be individually performed regarding each of three or more specific objects.

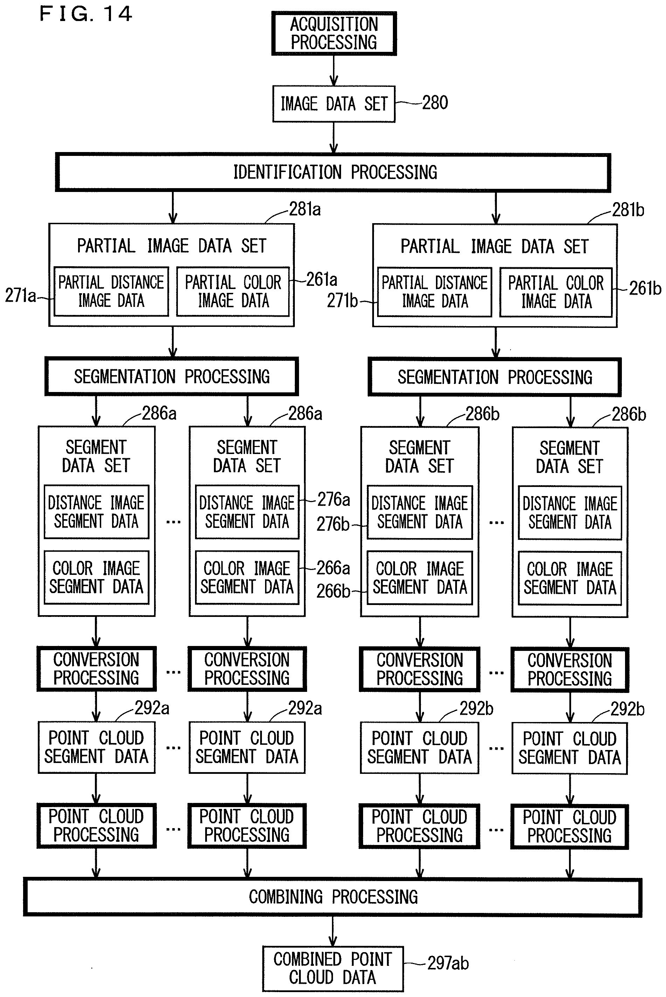

FIG. 14 is a schematic diagram illustrating one example of the point cloud generation processing of a case in which the segmentation processing, the conversion processing, and the point cloud processing are individually performed regarding each of two partial image data sets 281 respectively corresponding to the first specific object and the second specific object. When the segmentation processing, the conversion processing, and the point cloud processing are performed regarding the partial image data set 281 corresponding to the first specific object, a plurality of point cloud segment data 292 representing the first specific object are generated. Similarly, when the segmentation processing, the conversion processing, and the point cloud processing are performed regarding the partial image data set 281 corresponding to the second specific object, a plurality of point cloud segment data 292 representing the second specific object are generated. Because the plurality of point cloud segment data 292 representing the first specific object and the plurality of point cloud segment data 292 representing the second specific object are separately generated, for example, accuracy of the plurality of point cloud segment data 292 representing the first specific object and accuracy of the plurality of point cloud segment data 292 representing the second specific object can be made different from each other.

Each of the first specific object and the second specific object may be determined depending on a purpose in which the measurement system 1 is used, for example. For example, the first specific object may be a target object assumed to be of interest (which may be referred to as a target object of interest) in certain processing with the purpose in which the measurement system 1 is used. For example, the second specific object may be an object (which may be referred to as a target object of no interest) other than the target object of interest in the measurement space. For example, when the measurement system 1 is used for inspection of piping in an industry, the piping being the target object of interest may be set to the first specific object, and other objects (that is, target objects of no interest) may be set to the second specific objects. When the measurement system 1 is used for control of a robot that holds an object, the object to be held by the robot being the target object of interest may be set to the first specific object, and other objects may be set to the second specific objects. When the measurement system 1 is used for recognition of a vehicle on a road, the vehicle being the target object of interest is set to the first specific object, and other roads and the like may be set to the second specific objects. Each of the target object of interest and the target object of no interest may be one object, may include a plurality of objects of the same type, or may include a plurality of objects of different types.

The segmentation processing, the conversion processing, and the point cloud processing regarding the first specific object may be hereinafter respectively referred to as first segmentation processing, first conversion processing, and first point cloud processing. The segmentation processing, the conversion processing, and the point cloud processing regarding the second specific object may be respectively referred to as second segmentation processing, second conversion processing, and second point cloud processing.

In the example of FIG. 14, in the identification processing, in the image data set 280 acquired in the acquisition processing, the partial image data set 281 (also referred to as a partial image data set 281a) corresponding to the first specific object and the partial image data set 281 (also referred to as a partial image data set 281b) corresponding to the second specific object are identified. For example, when the first specific object is the target object of interest and the second specific object is the target object of no interest, it can be said that, in the identification processing, the image data set 280 is divided into the partial image data set 281a corresponding to the first specific object and the partial image data set 281b corresponding to the second specific object. Thus, in this case, it can be said that the identification processing is the segmentation processing in which the image data set 280 is divided into a plurality of segment data, and each of the partial image data set 281a and the partial image data set 281b is segment data.

For example, the storage 33 of the data processing apparatus 3 stores first feature information representing features of the first specific object and second feature information representing features of the second specific object. The identification unit 305 can identify the partial image data set 281a, based on the first feature information in the storage 33. The identification unit 305 can identify the partial image data set 281b, based on the second feature information in the storage 33.

The partial distance image data 271 and the partial color image data 261 included in the partial image data set 281a may be hereinafter respectively referred to as partial distance image data 271a and partial color image data 261a. The partial distance image data 271 and the partial color image data 261 included in the partial image data set 281b may be respectively referred to as partial distance image data 271b and partial color image data 261b.

After the identification processing, the segmentation unit 301 individually performs the segmentation processing regarding each of the partial image data sets 281a and 281b. Consequently, in the first segmentation processing, the partial distance image data 271a of the partial image data set 281a is divided into a plurality of distance image segment data 276a depending on the distance information, and the partial color image data 261a of the partial image data set 281a is divided into a plurality of color image segment data 266a depending on the distance information. In the second segmentation processing, the partial distance image data 271b of the partial image data set 281b is divided into a plurality of distance image segment data 276b depending on the distance information, and the partial color image data 261b of the partial image data set 281a is divided into a plurality of color image segment data 266b depending on the distance information. The segmentation unit 301 regards one distance image segment data 276a and one color image segment data 266a corresponding to the same distance section as one segment data set 286a corresponding to the distance section. The segmentation unit 301 regards one distance image segment data 276b and one color image segment data 266b corresponding to the same distance section as one segment data set 286b corresponding to the distance section.

In the segmentation processing regarding the partial image data set 281a, that is, the first segmentation processing, for example, the partial image data set 281a may be divided into N segment data sets 286a as described above. In the segmentation processing regarding the partial image data set 281b, that is, the second segmentation processing, for example, the partial image data set 281b may be divided into M (M is an integer of 2 or greater) segment data sets 286. N = M may hold, or N ≠ M may hold.

In the second segmentation processing, a possible range of the distance indicated by the distance information is divided into M distance sections of from a first distance section to an M-th distance section. The M distance sections is set similarly to the N distance sections described above. An m-th distance section (m is a variable and is an integer satisfying 1 ≤ m ≤ M) is a range of a distance Bm - 1 or more and less than the distance Bm, for example. Note that, exceptionally, the M-th distance section is a range of a distance BM - 1 or more and the distance BM or less. The distance Bm is larger than the distance Bm - 1. The distance B0 is a minimum value (for example, 0) of the possible range of the distance indicated by the distance information, for example. The distance BM is a maximum value of the possible range of the distance indicated by the distance information, for example.

In the second segmentation processing, similarly to the first segmentation processing, the partial distance image data 271b is divided into M distance image segment data 276b respectively corresponding to the M distance sections, and the partial color image data 261b is divided into M color image segment data 266b respectively corresponding to the M distance sections. The plurality of pieces of distance information included in one distance image segment data 276b indicate distances close to each other. The first segmentation processing and the second segmentation processing may be performed in parallel, or may be sequentially performed in series.

Note that the M distance sections may include a plurality of distance sections having different section lengths, or may include a plurality of distance sections having the same section length. The M distance sections need not be contiguous.

After the first segmentation processing, in the first conversion processing, regarding each of the N segment data sets 286a obtained in the first segmentation processing, the converter 302 converts the segment data set 286a to point cloud data 292a (also referred to as point cloud segment data 292a). Here, the segment data set 286a is the point cloud conversion target data. The point cloud segment data 292a obtained as a result of the conversion processing having been performed on the segment data set 286a corresponding to the n-th distance section is hereinafter referred to as the point cloud segment data 292a corresponding to the n-th distance section.

After the second segmentation processing, in the second conversion processing, regarding each of the M segment data sets 286b obtained in the second segmentation processing, the converter 302 converts the segment data set 286b to point cloud data 292b (also referred to as point cloud segment data 292b). Here, the segment data set 286b is the point cloud conversion target data. The point cloud segment data 292b obtained as a result of the conversion processing having been performed on the segment data set 286b corresponding to the m-th distance section is hereinafter referred to as the point cloud segment data 292b corresponding to the m-th distance section. The first conversion processing and the second conversion processing may be performed in parallel, or may be sequentially performed in series.

After the first conversion processing is performed, the point cloud processing unit 303 individually performs the first point cloud processing regarding each of the N generated point cloud segment data 292a. After the second conversion processing is performed, the point cloud processing unit 303 individually performs the second point cloud processing regarding each of the M generated point cloud segment data 292a. The first point cloud processing and the second point cloud processing may be performed in parallel, or may be sequentially performed in series.

After the first point cloud processing and the second point cloud processing are performed, the combining unit 304 combines the N point cloud segment data 292a subjected to the first point cloud processing and the M point cloud segment data 292a subjected to the second point cloud processing and generates one point cloud data 297ab (also referred to as combined point cloud data 297ab). The combined point cloud data 297ab is data representing the first specific object and the second specific object in the measurement space, using a plurality of points. The combined point cloud data 297ab is also data representing the surface shape and the color of the first specific object and the second specific object.

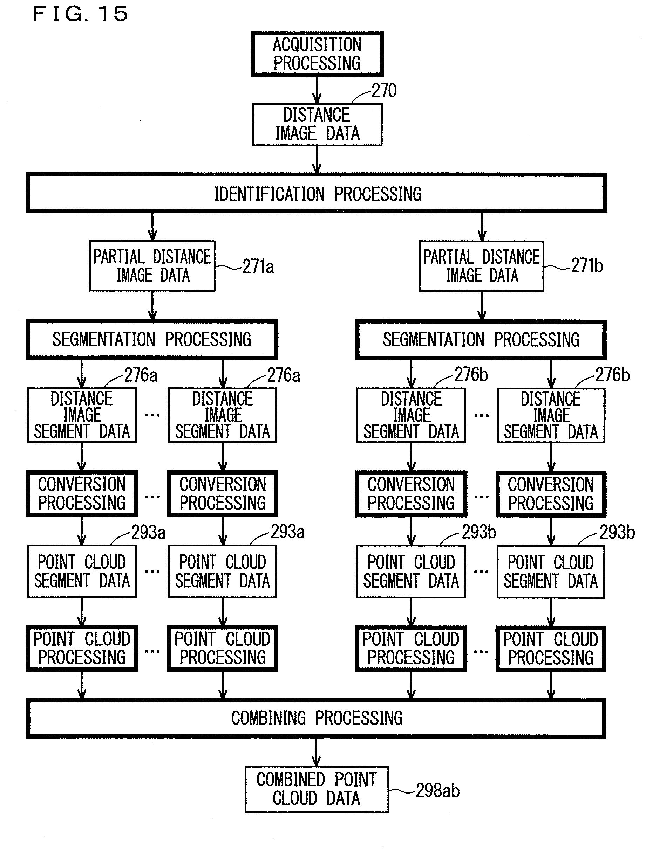

FIG. 15 is a schematic diagram illustrating one example of the point cloud generation processing of a case in which the segmentation processing, the conversion processing, and the point cloud processing are individually performed regarding each of two partial distance image data 271 respectively corresponding to the first specific object and the second specific object. When the segmentation processing, the conversion processing, and the point cloud processing are performed regarding the partial distance image data 271 corresponding to the first specific object, a plurality of point cloud segment data 293 representing the first specific object are generated. Similarly, when the segmentation processing, the conversion processing, and the point cloud processing are performed regarding the partial distance image data 271 corresponding to the second specific object, a plurality of point cloud segment data 293 representing the second specific object are generated. When the plurality of point cloud segment data 293 representing the first specific object and the plurality of point cloud segment data 293 representing the second specific object are separately generated, for example, accuracy of the plurality of point cloud segment data 293 representing the first specific object and accuracy of the plurality of point cloud segment data 293 representing the second specific object can be made different from each other.

In the example of FIG. 15, in the acquisition processing, the data acquisition unit 300 acquires the distance image data 270 from the sensor apparatus 2. Next, in the identification processing, the identification unit 305 identifies the partial distance image data 271a corresponding to the first specific object and the partial distance image data 271b corresponding to the second specific object in the distance image data 270.

Next, in the first segmentation processing, similarly to the above, the segmentation unit 301 divides the partial distance image data 271a into N distance image segment data 276a depending on the distance information. In the second segmentation processing, similarly to the above, the segmentation unit 301 divides the partial distance image data 271b into M distance image segment data 276b depending on the distance information.

After the first segmentation processing, in the first conversion processing, regarding each of the N distance image segment data 276a obtained in the first segmentation processing, the converter 302 converts the distance image segment data 276a to point cloud data 293a (also referred to as point cloud segment data 293a). Here, the distance image segment data 276a is the point cloud conversion target data. The point cloud segment data 293a obtained as a result of the conversion processing having been performed on the distance image segment data 276a corresponding to the n-th distance section is hereinafter referred to as the point cloud segment data 293a corresponding to the n-th distance section.

After the second segmentation processing, in the second conversion processing, regarding each of the M distance image segment data 276b obtained in the second segmentation processing, the converter 302 converts the distance image segment data 276b to point cloud data 293b (also referred to as point cloud segment data 293b). Here, the distance image segment data 276b is the point cloud conversion target data. The point cloud segment data 293b obtained as a result of the conversion processing having been performed on the distance image segment data 276b corresponding to the m-th distance section is hereinafter referred to as the point cloud segment data 293b corresponding to the m-th distance section.

After the first conversion processing, the point cloud processing unit 303 individually performs the first point cloud processing regarding each of the N generated point cloud segment data 293a. After the second conversion processing, the point cloud processing unit 303 individually performs the second point cloud processing regarding each of the M generated point cloud segment data 293b.

After the first point cloud processing and the second point cloud processing, in the combining processing, the combining unit 304 combines the N point cloud segment data 293a subjected to the first point cloud processing and the M point cloud segment data 293b subjected to the second point cloud processing and generates one point cloud data 298ab (also referred to as combined point cloud data 298ab). The combined point cloud data 298ab is data representing the first specific object and the second specific object in the measurement space, using a plurality of points. It can also be said that the combined point cloud data 298ab is data representing the surface shape of the first specific object and the second specific object.

As described above, in the examples of FIGS. 14 and 15, each of the partial distance image data 271a corresponding to the first specific object and the partial distance image data 271b corresponding to the second specific object is individually subjected to the segmentation processing. Consequently, the point cloud segment data having accuracy according to the first specific object and the point cloud segment data having accuracy according to the second specific object can be generated.

For example, a case is considered in which the first specific object is the target object of interest and the second specific object is the target object of no interest. In this case, for example, by setting N > M, the number (that is, the number of divisions) of the plurality of distance image segment data 276a corresponding to the target object of interest is larger than the number (that is, the number of divisions) of the plurality of distance image segment data 276b corresponding to the target object of no interest. Consequently, because finer point cloud processing (for example, noise removal processing) can be performed on the target object of interest than on the target object of no interest, accuracy of the plurality of point cloud segment data representing the target object of interest can be enhanced further than accuracy of the plurality of point cloud segment data representing the target object of no interest. In addition, because the number of divisions of the plurality of distance image segment data 276b corresponding to the target object of no interest is reduced, the amount of processing regarding the target object of no interest can be reduced.

In this manner, in the first specific object and the second specific object, the number of divisions regarding a specific object that is required to generate high-accuracy point cloud data may be set larger than the number of divisions regarding a specific object that is not required to generate high-accuracy point cloud data. Note that M > N may hold.

As another example, a case is considered in which the first specific object is a tall object and the second specific object is a short object. Here, the tall object is an object having a large dimension in the z-axis direction, and the short object is an object having a small dimension in the z-axis direction. In this case, for example, by setting N > M, the number of divisions of the plurality of distance image segment data 276a corresponding to the tall object is larger than the number of divisions of the plurality of distance image segment data 276b corresponding to the short object. Consequently, relatively fine point cloud processing can be performed regarding the tall object, and relatively coarse point cloud processing can be performed regarding the short object. Thus, both accuracy of the plurality of point cloud segment data representing the tall object and accuracy of the plurality of point cloud segment data representing the short object can be appropriately set.

In the example of FIG. 14, the point cloud processing is performed regarding each of the N point cloud segment data representing the first specific object and the point cloud processing is performed regarding each of the M point cloud segment data representing the second specific object, and thus accuracy of the N point cloud segment data representing the first specific object can be enhanced, and accuracy of the M point cloud segment data representing the second specific object can be enhanced.

Note that the point cloud processing need not be performed regarding at least one point cloud segment data of the N point cloud segment data representing the first specific object. The point cloud processing need not be performed regarding at least one point cloud segment data of the M point cloud segment data representing the second specific object.

For example, a case is considered in which the first specific object is the target object of interest and the second specific object is the target object of no interest. In this case, the point cloud processing need not be performed regarding all of the M point cloud segment data representing the target object of no interest, and the point cloud processing need not be performed regarding a part of the M point cloud segment data. Consequently, the amount of processing regarding the target object of no interest that is not required to generate high-accuracy point cloud data can be reduced.

In the combining processing, the N point cloud segment data representing the first specific object, each of which is subjected to the point cloud processing, and the M point cloud segment data representing the second specific object, which includes at least one point cloud segment data not subjected to the point cloud processing, may be combined and the combined point cloud data may be generated. Similarly, in the combining processing, the M point cloud segment data representing the second specific object, each of which is subjected to the point cloud processing, and the N point cloud segment data representing the first specific object, which includes at least one point cloud segment data not subjected to the point cloud processing, may be combined and the combined point cloud data may be generated.

For example, a case is considered in which the first specific object is the target object of interest and the second specific object is the target object of no interest. In this case, in the combining processing, the N point cloud segment data representing the target object of interest, each of which is subjected to the point cloud processing, and the M point cloud segment data representing the target object of no interest, which includes at least one point cloud segment data not subjected to the point cloud processing, may be combined. Consequently, accuracy of data related to the target object of interest in the combined point cloud data can be enhanced, and the amount of processing related to the target object of no interest can be reduced.

The point cloud processing unit 303 may perform decimation processing of reducing the number of data of the point cloud segment data. In other words, the point cloud processing unit 303 may perform the decimation processing of reducing the number of the plurality of points constituting the point cloud represented by the point cloud segment data. The decimation processing may be performed on each of the N point cloud segment data representing the first specific object, or may be performed on a part of the N point cloud segment data. The decimation processing may be performed on each of the M point cloud segment data representing the second specific object, or may be performed on a part of the M point cloud segment data.

For example, a case is considered in which the first specific object is the target object of interest and the second specific object is the target object of no interest. In this case, the decimation processing may be performed on at least one point cloud segment data of the M point cloud segment data representing the target object of no interest without performing the decimation processing regarding each of the N point cloud segment data representing the target object of interest. Consequently, density of the point cloud representing the target object of interest can be increased, and density of the point cloud representing the target object of no interest can be reduced.

Note that, for example, when there are a first target object of interest and a second target object of interest with accuracies required for the point cloud data being different from each other, the first specific object may be set to the first target object of interest, for example, and the second specific object may be set to the second target object of interest, for example.

The combining unit 304 may combine the N point cloud segment data representing the first specific object and generate one combined point cloud data, and may combine the M point cloud segment data representing the second specific object and generate one combined point cloud data. Consequently, the combined point cloud data representing the first specific object and the combined point cloud data representing the second specific object are separately generated.

### Embodiment 3

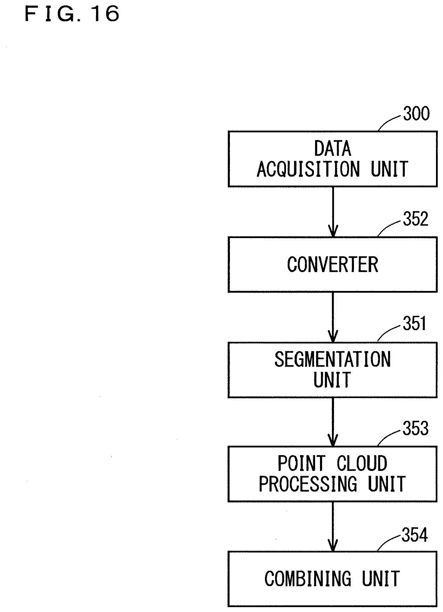

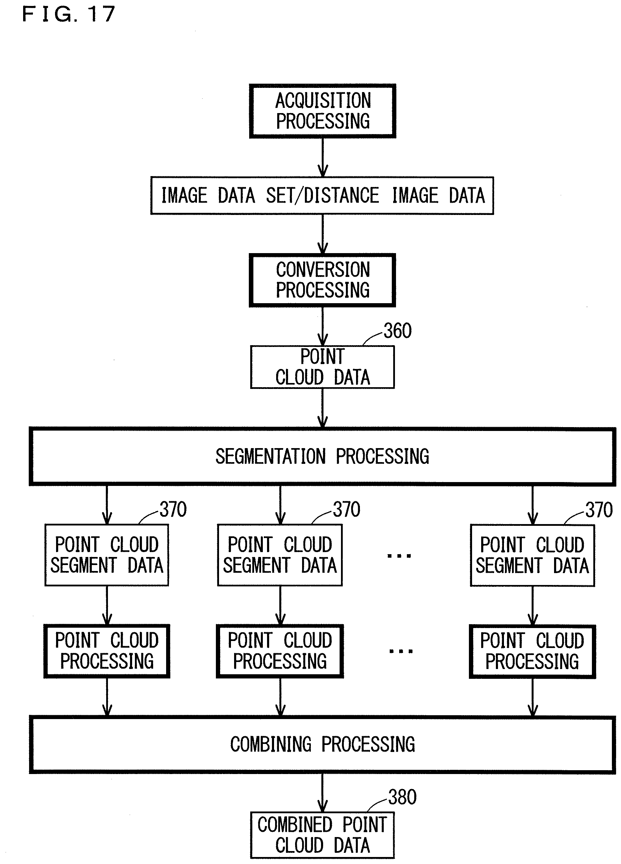

FIG. 16 is a schematic diagram illustrating one example of a configuration of the controller 30 of the data processing apparatus 3 included in the measurement system 1 according to Embodiment 3. FIG. 17 is a schematic diagram illustrating one example of the point cloud generation processing according to Embodiment 3. The measurement system 1 according to Embodiment 3 includes a configuration similar to that of the measurement system 1 according to Embodiments 1 and 2 described above. In comparison to the measurement system 1 according to Embodiments 1 and 2, the measurement system 1 according to Embodiment 3 is different only in the operation of the controller 30 of the data processing apparatus 3.

For example, the controller 30 according to Embodiment 3 performs the conversion processing of converting at least a part of the distance image data 270 acquired in the sensor apparatus 2 to point cloud data. Next, the controller 30 performs the segmentation processing of dividing the point cloud data into a plurality of point cloud segment data depending on the z-coordinate values. Then, the controller 30 individually processes each of the plurality of point cloud segment data. Consequently, a plurality of high-accuracy point cloud segment data can be obtained. The segmentation processing according to Embodiment 3 may be hereinafter referred to as point cloud segmentation processing to be distinguished from the segmentation processing according to Embodiments 1 and 2. The term "segmentation processing" by itself hereinafter refers to the segmentation processing according to Embodiments 1 and 2.

As illustrated in FIG. 16, as the functional blocks, the controller 30 according to Embodiment 3 includes the data acquisition unit 300 described above, a converter 352, a segmentation unit 351, a point cloud processing unit 353, and a combining unit 354. Note that all of the functions of the converter 352 or a part of the functions of the converter 352 may be implemented by a hardware circuit that does not require software to implement the functions. The same applies to the segmentation unit 351, the point cloud processing unit 353, and the combining unit 354.

Similarly to the converter 302 described above, the converter 352 performs the conversion processing of converting the image data set 280 or the distance image data 270 acquired in the data acquisition unit 300 to point cloud data 360 (see FIG. 17). Similarly to the point cloud segment data 290 described above and the like, in the point cloud data 360 based on the image data set 280, the plurality of pieces of coordinate information 800 and the plurality of pieces of color information 810 are associated with each other. In contrast, similarly to the point cloud segment data 291 described above and the like, the point cloud data 360 based on the distance image data 270 includes the coordinate information 800 but does not include the color information 810.

The segmentation unit 351 performs the point cloud segmentation processing of dividing the point cloud data 360 obtained in the conversion processing into a plurality of point cloud segment data 370 (see FIG. 17) depending on the z-coordinate values. Regarding each of the plurality of point cloud segment data 370 generated in the point cloud segmentation processing, the point cloud processing unit 353 performs the point cloud processing of performing predetermined processing on the point cloud segment data 370. Similarly to the point cloud processing unit 303 described above, the point cloud processing unit 353 performs the point cloud processing regarding each point cloud segment data 370. Similarly to the combining unit 304 described above, the combining unit 354 performs the combining processing of combining the plurality of point cloud segment data 370 subjected to the point cloud processing and generating combined point cloud data 380 (see FIG. 17).

In the point cloud generation processing according to Embodiment 3, as illustrated in FIG. 17, the acquisition processing, the conversion processing, and the point cloud segmentation processing are sequentially performed. Then, after a plurality of point cloud processings respectively corresponding to the plurality of point cloud segment data 370 are performed, the combining processing is performed. At least two point cloud processings of the plurality of point cloud processings may be performed in parallel. At least two point cloud processings of the plurality of point cloud processings may be sequentially performed in series.

In the point cloud segmentation processing, for example, a possible range of the z-coordinate value included in the coordinate information 800 is divided into P coordinate sections of from a first coordinate section to a P-th coordinate section (P is an integer of 2 or greater). Then, in the point cloud segmentation processing, the point cloud data 360 is divided into P point cloud segment data 370 respectively corresponding to the P coordinate sections.

For example, the P coordinate sections are set similarly to the N distance sections of the segmentation processing described above. A p-th coordinate section (p is a variable and is an integer satisfying 1 ≤ p ≤ P) is a range of a coordinate value Cp - 1 or more and less than the coordinate value Cp, for example. Note that, exceptionally, the P-th coordinate section is a range of a coordinate value CP - 1 or more and the coordinate value CP or less. The coordinate value Cp is larger than the coordinate value Cp - 1. A coordinate value C0 is a minimum value (for example, 0) of the possible range of the z-coordinate value, for example. The coordinate value CP is a maximum value of the possible range of the z-coordinate value, for example. For example, the first coordinate section is a range of the coordinate value C0 or more and less than a coordinate value C1, and the second coordinate section is a range of the coordinate value C1 - 1 or more and less than a coordinate value C2.

Regarding the point cloud data 360 based on the image data set 280, the segmentation unit 351 includes the coordinate information 800 including the z-coordinate values included in the p-th coordinate section and the color information 810 associated with the coordinate information 800 out of the point cloud data 360 in the point cloud segment data 370 corresponding to the p-th coordinate section. Consequently, the plurality of z-coordinate values included in the one point cloud segment data 370 indicate values close to each other. Regarding the point cloud data 360 based on the distance image data 270, the segmentation unit 351 includes the coordinate information 800 including the z-coordinate values included in the p-th coordinate section out of the point cloud data 360 in the point cloud segment data 370 corresponding to the p-th coordinate section.

The z-coordinate values of the plurality of pieces of coordinate information 800 included in the point cloud segment data 370 tend to indicate larger values as the coordinate section corresponding to the point cloud segment data 370 is larger. In other words, the z-coordinate values of the plurality of pieces of coordinate information 800 included in the point cloud segment data 370 corresponding to a (p+1)-th coordinate section tend to be larger than the z-coordinate values of the plurality of pieces of coordinate information 800 included in the point cloud segment data 370 corresponding to the p-th coordinate section.

Note that the P coordinate sections may include a plurality of coordinate sections having different section lengths, or may include a plurality of coordinate sections having the same section length. For example, the length of the first coordinate section may be the same as or different from the length of the second coordinate section. Unlike the above example, the P coordinate sections need not be contiguous.

The point cloud processing unit 353 individually performs the point cloud processing regarding each of the P generated point cloud segment data 370. For example, similarly to the above, the point cloud processing unit 353 may make the processing parameters different between processings for at least two point cloud segment data 370 of the P point cloud segment data 370.

Here, as described above, regarding the coordinate information 800 included in the point cloud data, the noise component tends to be larger as the z-coordinate values included therein are larger. In contrast, the z-coordinate values of the plurality of pieces of coordinate information 800 included in the point cloud segment data 370 tend to indicate larger values as the coordinate section corresponding to the point cloud segment data 370 is larger. Consequently, regarding the coordinate information 800 included in the point cloud segment data 370, the noise component tends to be larger as the coordinate section corresponding to the point cloud segment data 370 is larger. In other words, in the coordinate information 800 included in the point cloud segment data 370 corresponding to the (p+1)-th coordinate section, the noise component tends to be larger than in the coordinate information 800 included in the point cloud segment data 370 corresponding to the p-th coordinate section.

In view of this, the point cloud processing unit 353 may make the filter coefficients different between the noise removal processings for the P point cloud segment data 370, and thereby increase the noise removal effect of the noise removal processings for the point cloud segment data 370 as the coordinate section corresponding to the point cloud segment data 370 is larger. For example, the point cloud processing unit 353 may increase the noise removal effect regarding the coordinate information 800 included in the point cloud segment data 370 corresponding to the (p+1)-th coordinate section further than the noise removal effect regarding the coordinate information 800 included in the point cloud segment data 370 corresponding to the p-th coordinate section. Consequently, the noise removal effect can be increased for the coordinate information 800 whose noise component tends to be large which is included in the point cloud segment data 370 with a large corresponding coordinate section, and the noise removal effect can be reduced for the coordinate information 800 whose noise component tends to be small which is included in the point cloud segment data 370 with a small corresponding coordinate section. In other words, the noise removal effect can be increased for the coordinate information 800 whose noise component tends to be large which is included in the point cloud segment data 370 including large z-coordinate values, and the noise removal effect can be reduced for the coordinate information 800 whose noise component tends to be small which is included in the point cloud segment data 370 including small z-coordinate values. Therefore, the noise removal processing can be appropriately performed on each point cloud segment data 370. As a result, accuracy of each point cloud segment data 370 can be enhanced.

As described above, in Embodiment 3, the point cloud data 360 is divided into the plurality of point cloud segment data 370 depending on the z-coordinate values. Consequently, each point cloud segment data 370 can be appropriately processed depending on the coordinate section corresponding thereto. In other words, each point cloud segment data 370 can be appropriately processed depending on the z-coordinate values included therein. As a result, accuracy of each point cloud segment data 370 can be enhanced. Therefore, accuracy of the combined point cloud data 380 can be enhanced. As the number of divisions of the point cloud data 360 is larger, that is, as the value of P is larger, finer point cloud processing (for example, noise removal processing) can be performed. Accordingly, by setting the value of P to be large, accuracy of the combined point cloud data 380 can be enhanced. The value of P may be set depending on the accuracy of the combined point cloud data 380 required by a user. The value of P may be determined based on a measurement environment, or may be set based on identification of lenses of the stereo camera 220 and the color camera 23.

When the image data set 280 is converted to the point cloud data 360, that is, when the distance image data 270 is converted to the point cloud data 360 together with the color image data 260, the point cloud data 360 in which the coordinate information 800 and the color information 810 are appropriately associated can be divided into the plurality of point cloud segment data 370. Thus, the point cloud segment data 370 in which the coordinate information 800 and the color information 810 are appropriately associated can be obtained. In the point cloud segment data 370, the coordinate information 800 and the color information 810 are appropriately associated, and thus even when the point cloud processing is performed regarding the point cloud segment data 370, correspondence between the coordinate information 800 and the color information 810 can be appropriately maintained. Note that, in the conversion processing, a part of the image data set 280 or the distance image data 270 may be converted to the point cloud data 360.

### Embodiment 4

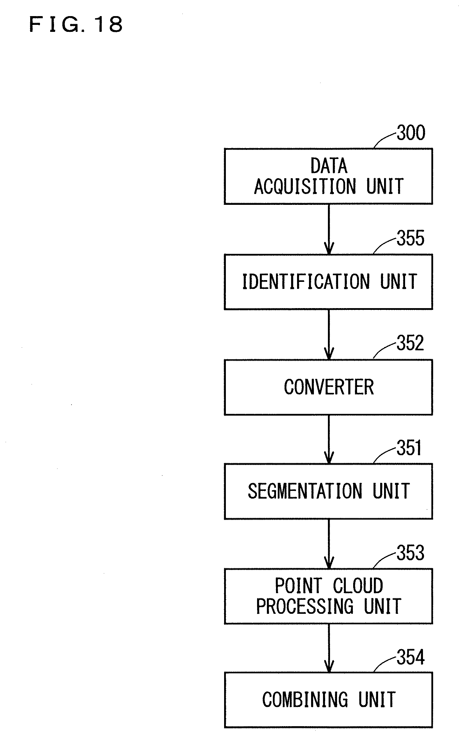

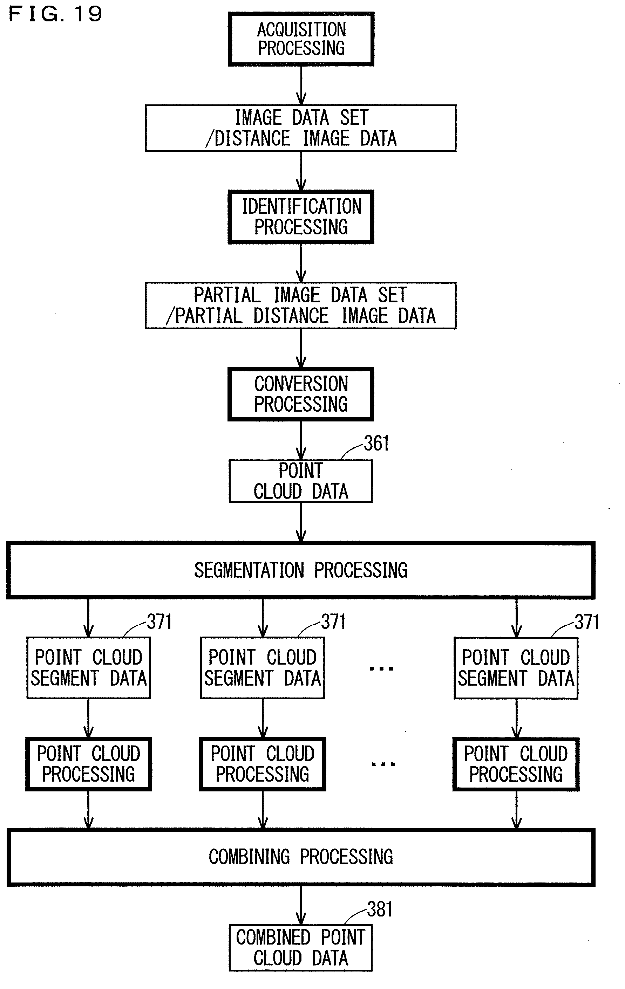

FIG. 18 is a schematic diagram illustrating one example of a configuration of the controller 30 of the data processing apparatus 3 included in the measurement system 1 according to Embodiment 4. FIG. 19 is a schematic diagram illustrating one example of the point cloud generation processing according to Embodiment 4. The measurement system 1 according to Embodiment 4 includes a configuration similar to that of the measurement system 1 according to Embodiment 3 described above. In comparison to the measurement system 1 according to Embodiment 3, the measurement system 1 according to Embodiment 4 is different only in the operation of the controller 30 of the data processing apparatus 3. Similarly to Embodiment 2, for example, the controller 30 according to Embodiment 4 generates point cloud data representing a specific object in the measurement space, based on data acquired in the sensor apparatus 2.

As illustrated in FIG. 18, as the functional blocks, the controller 30 according to Embodiment 4 includes an identification unit 355, in addition to the data acquisition unit 300, the converter 352, the segmentation unit 351, the point cloud processing unit 353, and the combining unit 354 described above. Note that all of the functions of the identification unit 355 or a part of the functions of the identification unit 355 may be implemented by a hardware circuit that does not require software to implement the functions.

Similarly to the identification unit 305 described above, the identification unit 355 performs the identification processing of identifying data related to the specific object in the measurement space in the image data set 280 acquired in the data acquisition unit 300. In the identification processing, similarly to the identification unit 305, the identification unit 355 identifies the partial distance image data 271 including the distance information related to the specific object in the distance image data 270. In the identification processing, similarly to the identification unit 305, the identification unit 355 identifies the partial color image data 261 including the color information related to the specific object in the color image data 260. The partial distance image data 271 and the partial color image data 261 identified in the identification processing constitute the partial image data set 281.

In the identification processing, similarly to the example of FIG. 13 described above, the identification unit 355 may identify the partial distance image data 271 including the distance information related to the specific object in the distance image data 270 acquired in the acquisition processing.

In the conversion processing, similarly to Embodiment 3, the converter 352 converts the partial image data set 281 or the partial distance image data 271 identified in the identification processing to point cloud data 361 (see FIG. 19).

In the point cloud segmentation processing, similarly to Embodiment 3, the segmentation unit 351 divides the point cloud data 361 into P point cloud segment data 371 depending on the z-coordinate values. Similarly to Embodiment 3, regarding each of the P point cloud segment data 371 generated in the point cloud segmentation processing, the point cloud processing unit 353 performs the point cloud processing of performing predetermined processing on the point cloud segment data 371. In the combining processing, similarly to Embodiment 3, the combining unit 354 combines the P point cloud segment data 371 subjected to the point cloud processing and generates combined point cloud data 381.

In the point cloud generation processing according to Embodiment 4, as illustrated in FIG. 19, the acquisition processing, the identification processing, the conversion processing, and the point cloud segmentation processing are sequentially performed. Then, after a plurality of point cloud processings respectively corresponding to the plurality of point cloud segment data 371 are performed, the combining processing is performed.

As described above, in Embodiment 4, not all but a part of the distance image data 270 is converted to the point cloud data 361. Then, the point cloud data 361 is divided into the plurality of point cloud segment data 371 depending on the z-coordinate values. Consequently, similarly to Embodiment 3, each point cloud segment data 371 can be appropriately processed depending on the coordinate section corresponding thereto. In other words, each point cloud segment data 371 can be appropriately processed depending on the z-coordinate values included therein. As a result, for example, high-accuracy point cloud data representing the specific object in the measurement space can be obtained.

Note that, in the point cloud generation processing, regarding each of the plurality of specific objects, the conversion processing, the point cloud segmentation processing, and the point cloud processing described above may be individually performed. For example, regarding each of the plurality of partial image data sets 281 respectively corresponding to the plurality of specific objects, the controller 30 may individually perform the conversion processing, the point cloud segmentation processing, and the point cloud processing. Regarding each of the plurality of partial distance image data 271 respectively corresponding to the plurality of specific objects, the controller 30 may individually perform the conversion processing, the point cloud segmentation processing, and the point cloud processing.

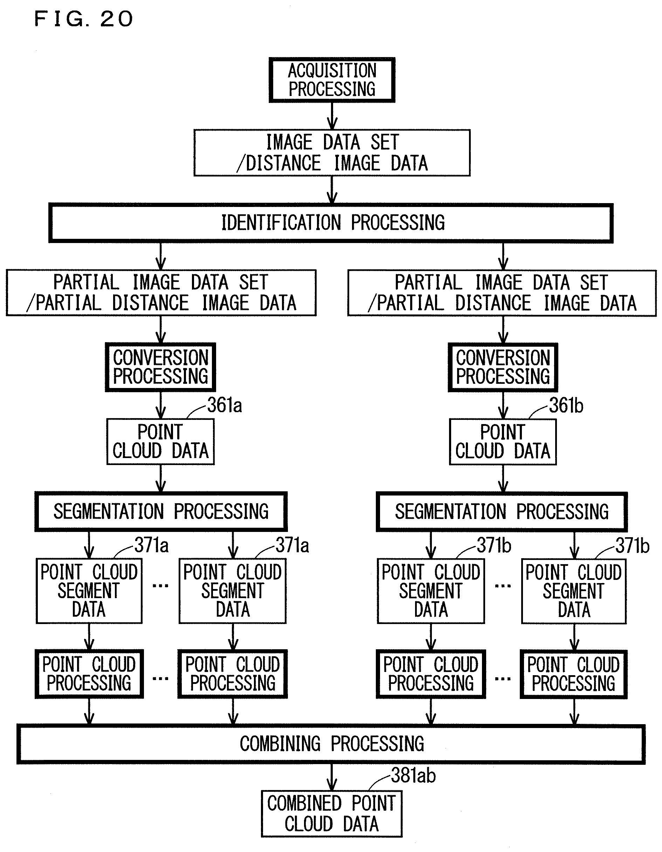

FIG. 20 is a schematic diagram illustrating one example of the point cloud generation processing of a case in which the conversion processing, the point cloud segmentation processing, and the point cloud processing are individually performed regarding each of the first specific object and the second specific object. Similarly to Embodiment 2, the conversion processing, the point cloud segmentation processing, and the point cloud processing regarding the first specific object may be hereinafter respectively referred to as first conversion processing, first point cloud segmentation processing, and first point cloud processing. The conversion processing, the point cloud segmentation processing, and the point cloud processing regarding the second specific object may be respectively referred to as second conversion processing, second point cloud segmentation processing, and second point cloud processing.

In the example of FIG. 20, in the identification processing, similarly to Embodiment 2, the partial image data set 281a corresponding to the first specific object and the partial image data set 281b corresponding to the second specific object are identified in the image data set 280 acquired in the acquisition processing. In the identification processing, similarly to Embodiment 2, the partial distance image data 271a corresponding to the first specific object and the partial distance image data 271b corresponding to the second specific object may be identified in the distance image data 270 acquired in the acquisition processing.

After the identification processing, in the first conversion processing, the converter 352 converts the partial image data set 281a or the partial distance image data 271a to point cloud data 361a. The point cloud data 361a is point cloud data representing the first specific object, using a plurality of points. In the second conversion processing, the converter 352 converts the partial image data set 281b or the partial distance image data 271b to point cloud data 361b. The point cloud data 361b is point cloud data representing the second specific object, using a plurality of points. The first conversion processing and the second conversion processing may be performed in parallel, or may be sequentially performed in series.

After the first conversion processing, the first point cloud segmentation processing is performed, and after the second conversion processing, the second point cloud segmentation processing is performed. In the first point cloud segmentation processing, for example, the point cloud data 361a may be divided into P point cloud segment data 371a as described above. In the second point cloud segmentation processing, for example, the point cloud data 361b may be divided into Q (Q is an integer of 2 or greater) point cloud segment data 371b. P = Q may hold, or P ≠ Q may hold.

In the second point cloud segmentation processing, for example, a possible range of the z-coordinate value included in the coordinate information 800 is divided into Q coordinate sections of from a first coordinate section to a Q-th coordinate section. Then, in the second point cloud segmentation processing, the point cloud data 361b is divided into Q point cloud segment data 371b respectively corresponding to the Q coordinate sections.

The Q coordinate sections are set similarly to the P coordinate sections. A q-th coordinate section (q is a variable and is an integer satisfying 1 ≤ q ≤ Q) is a range of a coordinate value Dq - 1 or more and less than the coordinate value Dq, for example. Note that, exceptionally, the Q-th coordinate section is a range of a coordinate value DQ - 1 or more and the coordinate value DQ or less. The coordinate value Dq is larger than the coordinate value Dq - 1. A coordinate value D0 is a minimum value (for example, 0) of the possible range of the z-coordinate value, for example. The coordinate value DQ is a maximum value of the possible range of the z-coordinate value, for example.

In the second point cloud segmentation processing, similarly to the first point cloud segmentation processing, the point cloud data 361b is divided into Q point cloud segment data 371b respectively corresponding to the Q coordinate sections. The first point cloud segmentation processing and the second point cloud segmentation processing may be performed in parallel, or may be sequentially performed in series.

Note that the Q coordinate sections may include a plurality of coordinate sections having different section lengths, or may include a plurality of coordinate sections having the same section length. The Q coordinate sections need not be contiguous.

After the first point cloud segmentation processing, the point cloud processing unit 353 individually performs the first point cloud processing regarding each of the P generated point cloud segment data 371a. After the second point cloud segmentation processing, the point cloud processing unit 353 individually performs the second point cloud processing regarding each of the Q generated point cloud segment data 371b. The first point cloud processing and the second point cloud processing may be performed in parallel, or may be sequentially performed in series.

After the first point cloud processing and the second point cloud processing are performed, the combining unit 354 combines the P point cloud segment data 371a representing the first specific object subjected to the first point cloud processing and the Q point cloud segment data 371b representing the second specific object subjected to the second point cloud processing, and generates one combined point cloud data 381ab. The combined point cloud data 381ab is data representing the first specific object and the second specific object in the measurement space, using a plurality of points.

As described above, in the example of FIG. 20, each of the point cloud data 361a representing the first specific object and the point cloud data 361b representing the second specific object is individually subjected to the segmentation processing. Consequently, the point cloud segment data 371a having accuracy according to the first specific object and the point cloud segment data 371b having accuracy according to the second specific object can be generated.

For example, a case is considered in which the first specific object is the target object of interest and the second specific object is the target object of no interest. In this case, for example, by setting P > Q, the number of divisions of the plurality of point cloud segment data 371a representing the target object of interest is larger than the number of divisions of the plurality of point cloud segment data 371b representing the target object of no interest. Consequently, finer point cloud processing (for example, noise removal processing) can be performed on the target object of interest than on the target object of no interest. Thus, accuracy of the plurality of point cloud segment data 371a representing the target object of interest can be enhanced further than accuracy of the plurality of point cloud segment data 371b representing the target object of no interest. In addition, because the number of divisions of the plurality of point cloud segment data 371b representing the target object of no interest is reduced, the amount of processing regarding the target object of no interest can be reduced.

In this manner, in the first specific object and the second specific object, the number of divisions regarding a specific object that is required to generate high-accuracy point cloud data may be set larger than the number of divisions regarding a specific object that is not required to generate high-accuracy point cloud data. Note that Q > P may hold.

In the example of FIG. 20, the point cloud processing is performed regarding each of the P point cloud segment data 371a representing the first specific object and the point cloud processing is performed regarding each of the Q point cloud segment data 371b representing the second specific object, and thus accuracy of the P point cloud segment data 371a representing the first specific object can be enhanced and accuracy of the Q point cloud segment data 371b representing the second specific object can be enhanced.

Note that the point cloud processing need not be performed regarding at least one point cloud segment data 371a of the P point cloud segment data 371a representing the first specific object. The point cloud processing need not be performed regarding at least one point cloud segment data 371b of the Q point cloud segment data 371b representing the second specific object.

In the combining processing, the P point cloud segment data 371a representing the first specific object, each of which is subjected to the point cloud processing, and the Q point cloud segment data 371a representing the second specific object, which includes at least one point cloud segment data 371b not subjected to the point cloud processing, may be combined and the combined point cloud data 381ab may be generated. Similarly, in the combining processing, the Q point cloud segment data 371b representing the second specific object, each of which is subjected to the point cloud processing, and the P point cloud segment data 371a representing the first specific object, which includes at least one point cloud segment data 371a not subjected to the point cloud processing, may be combined and the combined point cloud data 381ab may be generated.

The point cloud processing unit 353 may perform the decimation processing of reducing the number of data of the point cloud segment data 371a or the point cloud segment data 371b. The decimation processing may be performed on at least one of the P point cloud segment data 371a representing the first specific object. The decimation processing may be performed on at least one of the Q point cloud segment data 371b representing the second specific object.

Note that the combining unit 354 may combine the P point cloud segment data 371a and generate one combined point cloud data, and may combine the Q point cloud segment data 371b and generate one combined point cloud data. Consequently, the combined point cloud data representing the first specific object and the combined point cloud data representing the second specific object are separately generated.

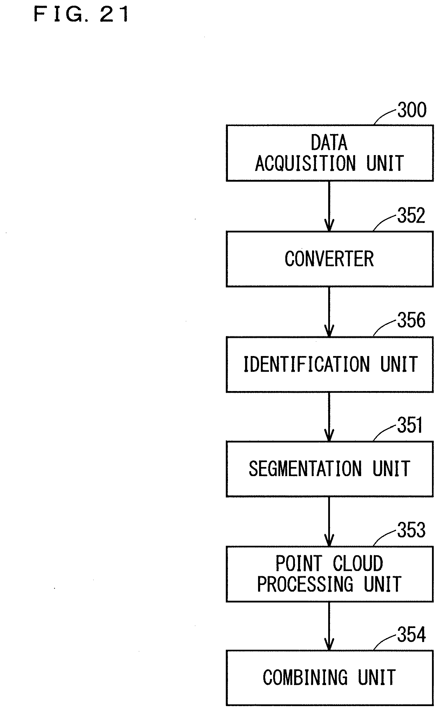

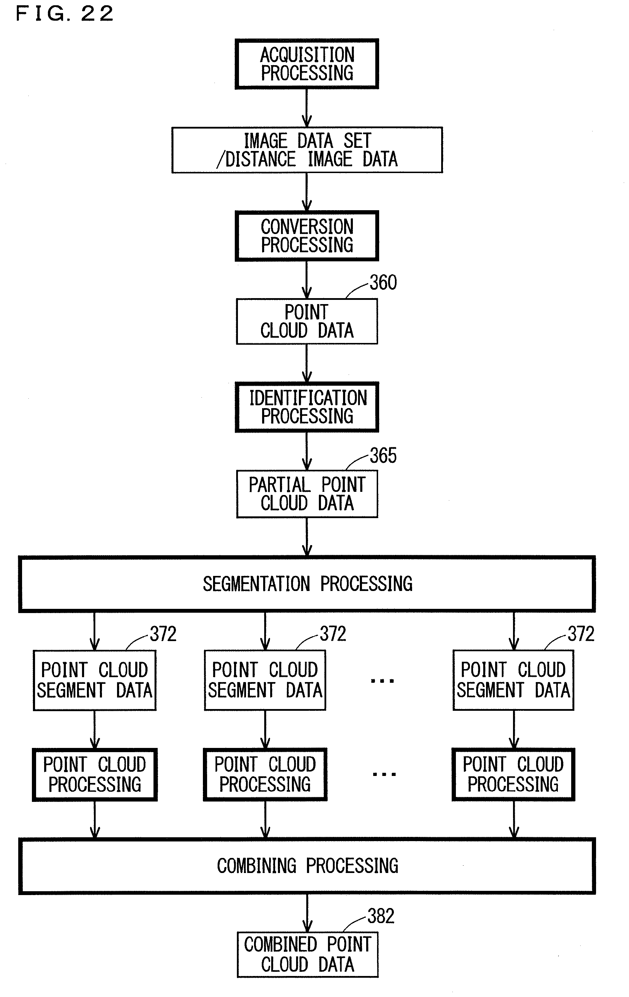

In the examples of examples of FIGS. 18 to 20, data related to the specific object is identified in the image data set 280 or the distance image data 270, and the identified data is converted to point cloud data. In contrast, the following will describe an example in which the image data set 280 or the distance image data 270 is converted to point cloud data, and data related to the specific object is identified in the point cloud data. FIG. 21 is a schematic diagram illustrating one example of a configuration of the controller 30 in this case. FIG. 22 is a schematic diagram illustrating one example of the point cloud generation processing performed by the controller 30 illustrated in FIG. 21.

In the example of FIG. 21, as the functional blocks, the controller 30 includes an identification unit 356, in addition to the data acquisition unit 300, the converter 352, the segmentation unit 351, the point cloud processing unit 353, and the combining unit 354 described above. Note that all of the functions of the identification unit 356 or a part of the functions of the identification unit 356 may be implemented by a hardware circuit that does not require software to implement the functions.

In the example of FIG. 21, similarly to the example of FIG. 17, the converter 352 performs the conversion processing of converting the image data set 280 or the distance image data 270 acquired in the acquisition processing of the data acquisition unit 300 to the point cloud data 360. The identification unit 356 performs the identification processing of identifying partial point cloud data 365 (see FIG. 22) including the coordinate information 800 related to the specific object in the point cloud data 360 obtained in the conversion processing, based on the feature information in the storage 33. The partial point cloud data 365 includes the coordinate information 800 of a plurality of points representing the specific object out of the point cloud represented by the point cloud data 360. The partial point cloud data 365 included in the point cloud data 360 based on the image data set 280 includes not only the coordinate information 800 of a plurality of points representing the specific object but also a plurality of pieces of color information 810 respectively corresponding to the coordinate information 800 of the plurality of points.

In the point cloud segmentation processing, similarly to the above, the segmentation unit 351 divides the partial point cloud data 365 identified in the identification processing into P point cloud segment data 372 (see FIG. 22) depending on the z-coordinate values. The point cloud processing unit 353 performs the point cloud processing regarding each of the P point cloud segment data 372 generated in the point cloud segmentation processing. In the combining processing, the combining unit 354 combines the P point cloud segment data 372 subjected to the point cloud processing and generates combined point cloud data 382 (see FIG. 22).

In this manner, even when not all but a part of the point cloud data 360 is divided into a plurality of point cloud segment data 372, each point cloud segment data 372 can be appropriately processed depending on the coordinate section corresponding thereto. Consequently, for example, high-accuracy point cloud data representing the specific object in the measurement space can be obtained.

Note that, in the point cloud generation processing, the point cloud segmentation processing and the point cloud processing may be individually performed regarding each of the plurality of specific objects. For example, the controller 30 may individually perform the point cloud segmentation processing and the point cloud processing regarding each of the plurality of partial point cloud data 365 respectively representing the plurality of specific objects.

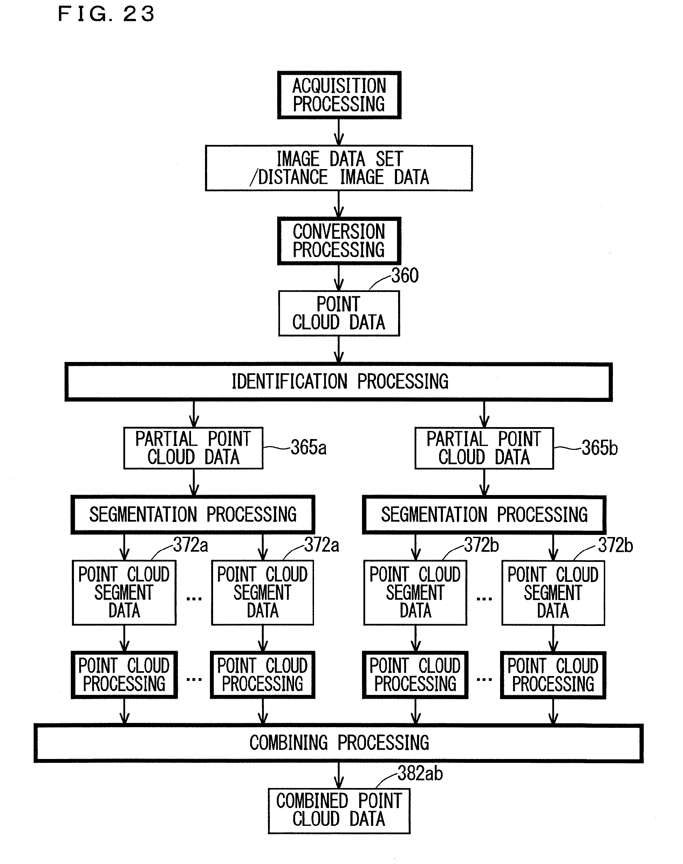

FIG. 23 is a schematic diagram illustrating one example of the point cloud generation processing of a case in which the point cloud segmentation processing and the point cloud processing are individually performed regarding each of the first specific object and the second specific object. Similarly to the above, the point cloud segmentation processing and the point cloud processing regarding the first specific object may be hereinafter respectively referred to as first point cloud segmentation processing and first point cloud processing. The point cloud segmentation processing and the point cloud processing regarding the second specific object may be respectively referred to as second point cloud segmentation processing and second point cloud processing.

In the example of FIG. 23, in the identification processing, the identification unit 356 identifies partial point cloud data 365a representing the first specific object and partial point cloud data 365b representing the second specific object in the point cloud data 360 acquired in the conversion processing. The identification unit 356 identifies the partial point cloud data 365a, based on the first feature information in the storage 33. The identification unit 356 identifies the partial point cloud data 365b, based on the second feature information in the storage 33.

After the identification processing, the first point cloud segmentation processing and the second point cloud segmentation processing are performed. In the first point cloud segmentation processing, for example, the partial point cloud data 365a is divided into P point cloud segment data 372a depending on the z-coordinate values. In the second point cloud segmentation processing, for example, the partial point cloud data 365b is divided into Q point cloud segment data 372b depending on the z-coordinate values. The first point cloud segmentation processing and the second point cloud segmentation processing may be performed in parallel, or may be sequentially performed in series.

After the first point cloud segmentation processing, the point cloud processing unit 353 individually performs the first point cloud processing regarding each of the P generated point cloud segment data 372a. After the second point cloud segmentation processing, the point cloud processing unit 353 individually performs the second point cloud processing regarding each of the Q generated point cloud segment data 372b. The first point cloud processing and the second point cloud processing may be performed in parallel, or may be sequentially performed in series.

After the first point cloud processing and the second point cloud processing are performed, the combining unit 354 combines the P point cloud segment data 372a representing the first specific object subjected to the first point cloud processing and the Q point cloud segment data 372b representing the second specific object subjected to the second point cloud processing, and generates one combined point cloud data 382ab. The combined point cloud data 382ab is data representing the first specific object and the second specific object in the measurement space, using a plurality of points.

As described above, in the example of FIG. 23, each of the partial point cloud data 365a representing the first specific object and the partial point cloud data 365b representing the second specific object is individually subjected to the segmentation processing. Consequently, similarly to the example of FIG. 20, the point cloud segment data 372a having accuracy according to the first specific object and the point cloud segment data 372b having accuracy according to the second specific object can be generated.

Note that, similarly to the example of FIG. 20, the point cloud processing need not be performed regarding at least one point cloud segment data 372a of the P point cloud segment data 372a representing the first specific object. The point cloud processing need not be performed regarding at least one point cloud segment data 372b of the Q point cloud segment data 372b representing the second specific object.

Similarly to the example of FIG. 20, in the combining processing, the P point cloud segment data 372a representing the first specific object, each of which is subjected to the point cloud processing, and the Q point cloud segment data 372a representing the second specific object, which includes at least one point cloud segment data 372b not subjected to the point cloud processing, may be combined and the combined point cloud data 382ab may be generated. Similarly, in the combining processing, the Q point cloud segment data 372b representing the second specific object, each of which is subjected to the point cloud processing, and the P point cloud segment data 372a representing the first specific object, which includes at least one point cloud segment data 372a not subjected to the point cloud processing, may be combined and the combined point cloud data 382ab may be generated.

Similarly to the example of FIG. 20, the point cloud processing unit 353 may perform the decimation processing of reducing the number of data of the point cloud segment data 372a or the point cloud segment data 372b. The decimation processing may be performed on at least one of the P point cloud segment data 372a. The decimation processing may be performed on at least one of the Q point cloud segment data 372b representing the second specific object.

Note that the combining unit 354 may combine the P point cloud segment data 372a and generate one combined point cloud data, and may combine the Q point cloud segment data 372b and generate one combined point cloud data. Consequently, the combined point cloud data representing the first specific object and the combined point cloud data representing the second specific object are separately generated.

In the identification processing of the examples of FIGS. 18 to 20, data related to the specific object is identified in the image data set 280 or the distance image data 270. In contrast, in the identification processing of the examples of FIGS. 21 to 23, data related to the specific object is identified in the point cloud data based on the image data set 280 or the distance image data 270. As described above, when the image data set 280 or the distance image data 270 is converted to point cloud data, the measurement points increase, and thus the amount of data of the point cloud data is larger than the amount of data of the image data set 280 or the distance image data 270. As in the identification processing of the examples of FIGS. 18 to 20, when data related to the specific object is identified in the image data set 280 or the distance image data 270 having a smaller amount of data than the point cloud data, a load of the identification processing can be reduced.

In Embodiments 1 and 2, the segmentation processing is performed on the image data set 280 or the distance image data 270 having a relatively small amount of data. In contrast, in Embodiments 3 and 4, the segmentation processing is performed on the point cloud data having a relatively large amount of data. As in Embodiments 1 and 2, when the segmentation processing is performed on the image data set 280 or the distance image data 270 having a relatively small amount of data, a load of the segmentation processing can be reduced.

As described above, while the measurement system 1 according to a plurality of embodiments has been described, the measurement system 1 is not limited to the above examples. For example, the sensor apparatus 2 and the data processing apparatus 3 may be accommodated in one case, or may be accommodated in separate cases. In the sensor apparatus 2, at least one of the distance measurement sensor 22 and the color camera 23 may be accommodated in a case separate from one for other configurations. The distance measurement sensor 22 and the color camera 23 may be accommodated in the same case, or may be accommodated in separate cases.

The controller 20 of the sensor apparatus 2 may also function as the controller 30 of the data processing apparatus 3. In other words, the controller 20 may include the data acquisition unit, the identification unit, the segmentation unit, the converter, the point cloud processing unit, and the combining unit described above included in the controller 30. In this case, the first interface 31, the second interface 32, and the storage 33 of the data processing apparatus 3 are unnecessary, and for example, the interface 21 of the sensor apparatus 2 may communicate with the external apparatus, and the sensor apparatus 2 may also function as the data processing apparatus 3. In the measurement system 1, the controller 30 may generate the distance image data 270 based on the image data 250, instead of the controller 20 generating the distance image data 270 based on the image data 250. In this case, for example, the controller 30 of the data processing apparatus 3 may function as the controller 20 of the sensor apparatus 2. In this case, the sensor apparatus 2 may include the distance measurement sensor 22, the color camera 23, and the interface 21, and the image data 250 output by the distance measurement sensor 22 and the color image data 260 output by the color camera 23 may be input to the data processing apparatus 3 via the interface 21. The controller 30 of the data processing apparatus 3 may generate the distance image data 270 based on the image data 250, and may perform the filter processing on the color image data 260.

As in FIGS. 14, 15, 20, and 23, when a plurality of point cloud segment data are generated regarding each of a plurality of specific objects, each point cloud segment data of at least one target object of no interest in the plurality of specific objects need not be used in the combining processing or combined with other data. In this case, the point cloud segment data not used in the combining processing may or may not be discarded.

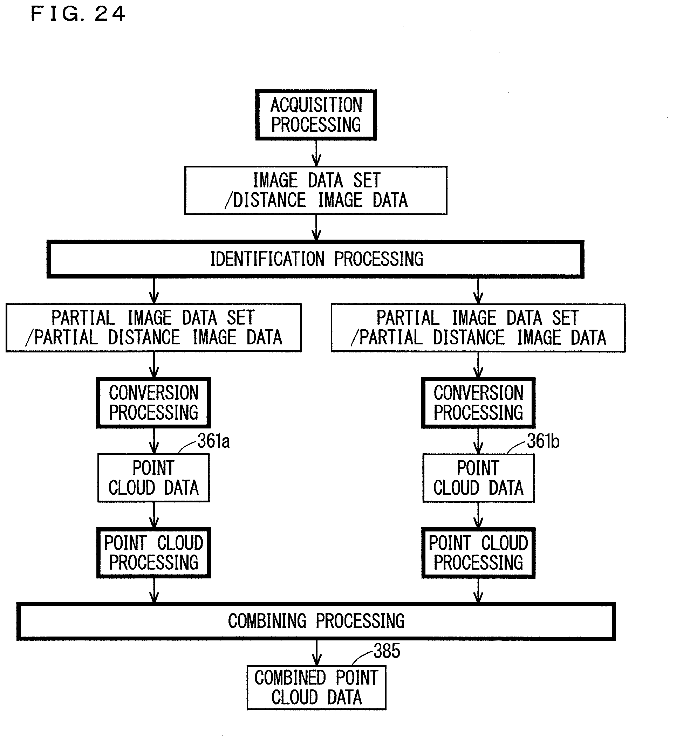

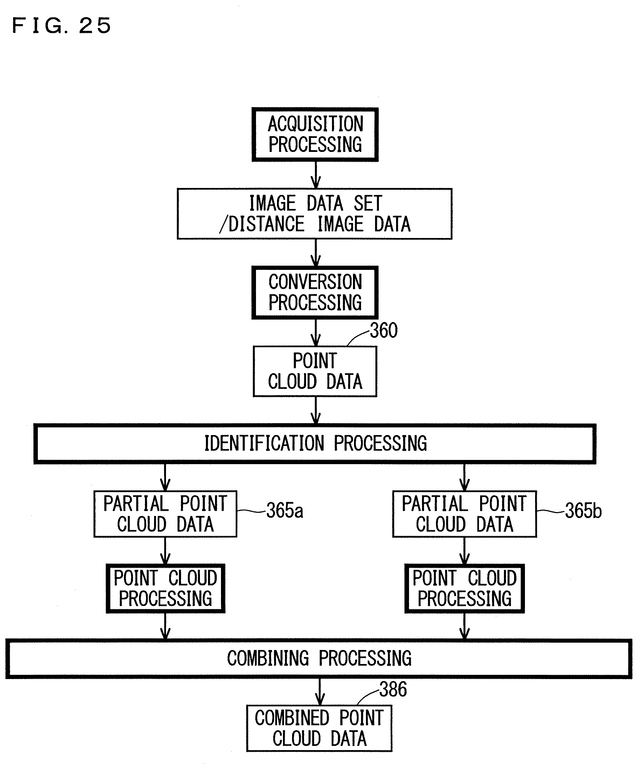

In the point cloud generation processing of FIGS. 20 and 23, the segmentation processing need not be performed. FIG. 24 is a schematic diagram illustrating one example of the point cloud generation processing of FIG. 20 in which the segmentation processing is not performed. FIG. 25 is a schematic diagram illustrating one example of the point cloud generation processing of FIG. 23 in which the segmentation processing is not performed. In the examples of FIGS. 24 and 25, the controller 30 does not include the converter 352.

In the point cloud generation processing of FIG. 24, the point cloud processing unit 353 performs the first point cloud processing on the point cloud data 361a representing the first specific object, and performs the second point cloud processing on the point cloud data 361b representing the second specific object. Then, the combining unit 354 combines the point cloud data 361a subjected to the first point cloud processing and the point cloud data 361b subjected to the second point cloud processing, and generates combined point cloud data 385.

In the point cloud generation processing of FIG. 25, the point cloud processing unit 353 performs the first point cloud processing on the partial point cloud data 365a (also referred to as point cloud data 365a) representing the first specific object, and performs the second point cloud processing on the partial point cloud data 365b (also referred to as point cloud data 365b) representing the second specific object. Then, the combining unit 354 combines the partial point cloud data 365a subjected to the first point cloud processing and the partial point cloud data 365b subjected to the second point cloud processing, and generates combined point cloud data 386.

In the examples of FIGS. 24 and 25, the first point cloud processing and the second point cloud processing may be different from each other. For example, a case is considered in which the first specific object is the target object of interest and the second specific object is the target object of no interest. In this case, the second point cloud processing may include the decimation processing of reducing the number of data of the point cloud data 361b or the point cloud data 365b, and the first point cloud processing need not include the decimation processing. Consequently, density of the point cloud representing the target object of interest can be increased, and density of the point cloud representing the target object of no interest can be reduced. The first point cloud processing may include the filter processing, and the second point cloud processing need not include the filter processing. Consequently, accuracy of the point cloud data representing the target object of interest can be enhanced, and a processing load of the point cloud data representing the target object of no interest can be reduced. The first point cloud processing may include first filter processing having filter coefficients for increasing the noise removal effect, and the second point cloud processing may include second filter processing having filter coefficients for reducing the noise removal effect. In this case, the processing parameters of the filter processing are different between the first point cloud processing and the second point cloud processing.

Note that the first point cloud processing and the second point cloud processing may be the same as each other. The first point cloud processing need not be performed on at least one of the point cloud data 361a and 365a representing the first specific object. The second point cloud processing need not be performed on at least one of the point cloud data 361b and 365b representing the second specific object. The point cloud data 361a and 365a representing the first specific object and the point cloud data 361b and 365b representing the second specific object need not be combined.

The point cloud data representing the specific object not subjected to the segmentation processing as with the point cloud data 361a, 361b, 365a, and 365b of FIGS. 24 and 25 may be hereinafter referred to as non-SG point cloud data. In the examples of FIGS. 24 and 25, the combining unit 354 combines a plurality of non-SG point cloud data and generates combined point cloud data.

In each of the embodiments described above, although the controller 30 is provided with the combining unit that combines the plurality of point cloud segment data or the plurality of non-SG point cloud data, the combining unit need not be provided in the controller 30. In this case, the controller 30 may transmit the plurality of point cloud segment data subjected to the point cloud processing in the point cloud processing unit or the non-SG point cloud data to the external apparatus via the second interface 32. Then, the external apparatus may combine the plurality of point cloud segment data or the non-SG point cloud data and generate combined point cloud data.

### <Use Examples of Measurement System>

The measurement system 1 can be used for various purposes. For example, as described above, the measurement system 1 may be used for inspection of piping in an industry. In this case, for example, the position, the shape, and the like of the piping may be recognized based on the combined point cloud data generated in the data processing apparatus 3, the plurality of point cloud segment data representing the piping, or the non-SG point cloud data representing the piping. The measurement system 1 may be used for recognition of a vehicle on a road. In this case, for example, the position, the shape, and the like of the vehicle may be recognized based on the combined point cloud data generated in the data processing apparatus 3, the plurality of point cloud segment data representing the vehicle, or the non-SG point cloud data representing the vehicle. The measurement system 1 may be used for control of a robot. One example of a robot control system 500 including the measurement system 1 will be described below.

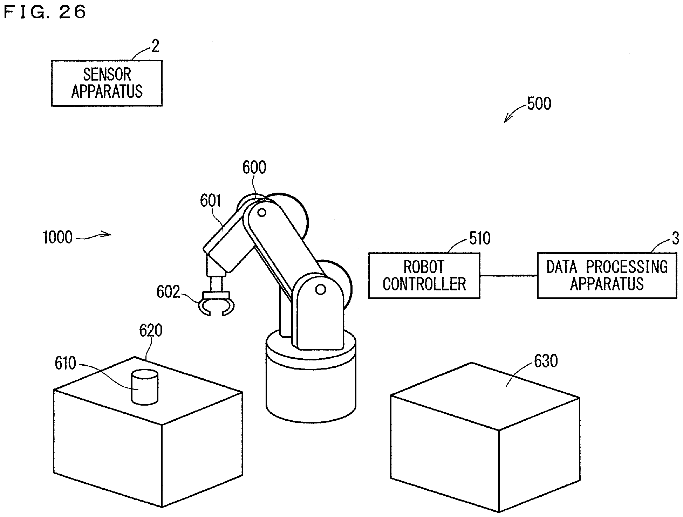

FIG. 26 is a schematic diagram illustrating one example of the robot control system 500 that controls a robot 600. As illustrated in FIG. 26, the robot control system 500 includes, for example, the sensor apparatus 2, the data processing apparatus 3, and a robot controller 510 that controls the robot 600. The robot 600 and the robot control system 500 that controls the robot 600 constitute a robot system.

The robot controller 510 is a type of computer apparatus, and includes a configuration similar to that of the data processing apparatus 3, for example. The robot controller 510 can communicate with the second interface 32 of the data processing apparatus 3, for example. The robot controller 510 controls the robot 600, based on the combined point cloud data output from the second interface 32, for example. Note that all of the functions of the robot controller 510 or a part of the functions of the robot controller 510 may be implemented by a hardware circuit that does not require software to implement the functions.

For example, the robot 600 moves a work target object 610 from a work start table 620 to a work destination table 630. The robot controller 510 controls the robot 600 so that the work target object 610 is moved from the work start table 620 to the work destination table 630. The robot 600 includes, for example, an arm 601 and an end effector 602 to hold the work target object 610. The robot 600 moves the arm 601 while holding the work target object 610 with the end effector 602, and thereby moves the work target object 610 from the work start table 620 to the work destination table 630. The robot controller 510 can control the arm 601 and the end effector 602.

The robot 600, the work target object 610, the work start table 620, and the work destination table 630 are located in the measurement space 1000 of the measurement system 1. The stereo camera 220 and the color camera 23 of the sensor apparatus 2 capture images of the work target object 610, the work start table 620, and the work destination table 630. For example, the data processing apparatus 3 outputs the combined point cloud data representing the work target object 610, the work start table 620, and the work destination table 630 to the robot controller 510. The stereo camera 220 and the color camera 23 capture images periodically, for example, and the data processing apparatus 3 sequentially outputs the combined point cloud data to the robot controller 510. Note that, when there is an obstruction that hinders movement of the robot 600 in the measurement space 1000, the combined point cloud data also represents the obstruction.

The robot controller 510 can recognize the object in the measurement space 1000, based on the combined point cloud data from the data processing apparatus 3. For example, the robot controller 510 performs recognition processing of recognizing the work target object 610, the work start table 620, the work destination table 630, and the obstruction. In the recognition processing, for example, the robot controller 510 can recognize a position and an orientation of each of the work target object 610, the work start table 620, the work destination table 630, and the obstruction. The robot controller 510 controls the arm 601 and the end effector 602, based on results of the recognition processing. Consequently, the robot 600 can appropriately hold the work target object 610, and can appropriately move the held work target object 610 from the work start table 620 to the work destination table 630.

Note that, when there is an obstruction in the measurement space 1000, the robot controller 510 determines an operation path of the arm 601 to avoid the obstruction, based on results of the recognition processing, for example. Then, the robot controller 510 controls the arm 601 so that the arm 601 moves along the determined operation path.

For example, as in the examples of FIGS. 14, 15, 20, 23, 24, and 25, a case is considered in which the data processing apparatus 3 outputs the combined point cloud data representing the target object of interest and the target object of no interest. In this case, when the processing of the robot 600 holding the work target object 610 is performed, the work target object 610 and the work start table 620 may be set to the target objects of interest, and the work destination table 630 may be set to the target object of no interest. When the processing of moving the arm 601 is performed, the work destination table 630 may be set to the target object of interest, and the work target object 610 and the work start table 620 may be set to the target objects of no interest. In this manner, when the target object of interest and the target object of no interest are set depending on the processing, the robot 600 can be appropriately controlled. Note that, when the stereo camera 220 and the color camera 23 of the sensor apparatus 2 also capture images of the arm 601 of the robot 600, the arm 601 may be set to a second target object of no interest. In this case, the plurality of point cloud segment data or the non-SG point cloud data regarding the second target object of no interest need not be used in the combining processing or combined with other data. Consequently, the robot controller 510 can control the robot 600, based on the combined point cloud data not including data representing the arm 601. Thus, even when the stereo camera 220 and the color camera 23 capture images of the arm 601, for example, the robot controller 510 does not recognize the arm 601 as an obstruction.

When the data processing apparatus 3 does not include the combining unit and outputs the plurality of point cloud segment data or the plurality of non-SG point cloud data, the robot controller 510 may control the robot 600, based on the plurality of point cloud segment data or the plurality of non-SG point cloud data. In this case, for example, the robot controller 510 may combine the plurality of point cloud segment data or the non-SG point cloud data and generate the combined point cloud data, and control the robot 600, based on the generated combined point cloud data.

The robot controller 510 may be implemented in a cloud server. In this case, a communication unit connected to the Internet may be provided to the robot 600, and the robot controller 510 may control the robot 600 via the Internet. The data processing apparatus 3 may be implemented in a cloud server. In this case, the data processing apparatus 3 may communicate with the robot controller 510 via the Internet. The controller 30 of the data processing apparatus 3 may function as the robot controller 510. In this case, the data processing apparatus 3 functions as the robot control system 500. When the controller 30 functions as the robot controller 510, the combining unit may be included in the robot controller 510. The sensor apparatus 2 need not be included in the robot control system 500.

While the measurement system, the sensor apparatus, the data processing apparatus, and the robot control system have been described in detail as in the above, the above description is in all aspects illustrative, and the present disclosure is not limited to the above description. Various examples described above may be applied in combination, on the condition that the combination is consistent. It is therefore understood that numerous examples not illustrated herein are assumable without departing from the scope of the present disclosure.

### EXPLANATION OF REFERENCE SIGNS

3 Data processing apparatus
260 Color image data
261, 261a, 261b Partial color image data
265, 266, 266a, 266b Color image segment data
270 Distance image data
271, 271a, 271b Partial distance image data
275, 276, 276a, 276b Distance image segment data
285, 286, 286a, 286b Segment data set
290, 291, 292, 292a, 292b, 293, 293a, 293b, 370, 371, 371a, 371b, 372, 372a, 372b Point cloud segment data
295, 296, 297, 297ab, 298, 298ab, 380, 381, 381ab, 382, 382ab Combined point cloud data
301, 351 Segmentation unit
302, 352 Converter
303, 353 Point cloud processing unit
304, 354 Combining unit
330 Program
360, 361, 361a, 361b Point cloud data
365, 365a, 365b Partial point cloud data
500 Robot control system
600 Robot
1000 Measurement space
1001 Measurement point

## Claims

1. A data processing apparatus comprising:
a segmentation unit configured to divide at least a part of distance image data including distance information to a measurement point in a measurement space into a plurality of first distance image segment data depending on the distance information;
a converter configured to individually convert each of the plurality of first distance image segment data to first point cloud segment data being point cloud data including coordinate information of the measurement point in the measurement space; and
a point cloud processing unit configured to individually perform processing on each of a plurality of the first point cloud segment data respectively obtained from the plurality of first distance image segment data in the converter.

2. The data processing apparatus according to claim 1, wherein the segmentation unit divides first partial distance image data including the distance information related to a first object in the measurement space in the distance image data into the plurality of first distance image segment data.

3. The data processing apparatus according to claim 2, wherein
the segmentation unit divides second partial distance image data including the distance information related to a second object in the measurement space in the distance image data into a plurality of second distance image segment data depending on the distance information, and
the converter individually converts each of the plurality of second distance image segment data to second point cloud segment data being the point cloud data including the coordinate information of the measurement point in the measurement space.

4. The data processing apparatus according to claim 3, wherein
the segmentation unit makes a number of divisions of the plurality of first distance image segment data and a number of divisions of the plurality of second distance image segment data different from each other.

5. The data processing apparatus according to any one of claims 1 to 4, wherein
the converter performs at least two conversion processings of a plurality of conversion processings of respectively converting the plurality of first distance image segment data to the plurality of first point cloud segment data in parallel.

6. The data processing apparatus according to any one of claims 1 to 5, wherein
the segmentation unit divides at least a part of color image data including color information of the measurement point in the measurement space into a plurality of color image segment data depending on the distance information corresponding to the color information,
the plurality of first distance image segment data and the plurality of color image segment data constitute a plurality of segment data sets in which each set includes one first distance image segment data and one color image segment data of a same distance section, and
the converter individually converts each of the plurality of segment data sets to the first point cloud segment data including the coordinate information and the color information of the measurement point in the measurement space.

7. A data processing apparatus comprising:
a converter configured to convert at least a part of distance image data including distance information to a measurement point in a measurement space to first point cloud data including coordinate information of the measurement point in the measurement space;
a segmentation unit configured to divide at least a part of the first point cloud data into a plurality of first point cloud segment data depending on a coordinate value of the measurement space in a depth direction; and
a point cloud processing unit configured to individually perform processing on each of the plurality of first point cloud segment data.

8. The data processing apparatus according to claim 7, wherein
the converter converts first partial distance image data including the distance information related to a first object in the measurement space in the distance image data to the first point cloud data, and
the segmentation unit divides the first point cloud data into the plurality of first point cloud segment data.

9. The data processing apparatus according to claim 8, wherein
the converter converts second partial distance image data including the distance information related to a second object in the measurement space in the distance image data to second point cloud data including the coordinate information of the measurement point in the measurement space, and
the segmentation unit divides the second point cloud data into a plurality of second point cloud segment data depending on the coordinate value of the measurement space in the depth direction.

10. The data processing apparatus according to claim 7, wherein
the segmentation unit divides first partial point cloud data including the coordinate information related to a first object in the measurement space in the first point cloud data into the plurality of first point cloud segment data.

11. The data processing apparatus according to claim 10, wherein
the segmentation unit divides second partial point cloud data including the coordinate information related to a second object in the measurement space in the first point cloud data into a plurality of second point cloud segment data depending on the coordinate value of the measurement space in the depth direction.

12. The data processing apparatus according to claim 9 or 11, wherein
the segmentation unit makes a number of divisions of the plurality of first point cloud segment data and a number of divisions of the plurality of second point cloud segment data different from each other.

13. The data processing apparatus according to any one of claims 7 to 12, wherein
the converter converts at least a part of a data set including color image data including color information and the distance image data of the measurement point in the measurement space to the first point cloud data including the coordinate information and the color information of the measurement point in the measurement space.

14. The data processing apparatus according to claim 3, 4, 9 or 11, wherein
the point cloud processing unit individually performs processing on each of a plurality of second point cloud segment data obtained in the converter.

15. The data processing apparatus according to claim 3, 4, 9, 11 or 14, further comprising
a combining unit configured to combine the plurality of first point cloud segment data and the plurality of second point cloud segment data.

16. The data processing apparatus according to claim 15, wherein
the point cloud processing unit does not perform processing on at least one second point cloud segment data of the plurality of second point cloud segment data obtained in the converter, and
the combining unit combines the plurality of first point cloud segment data processed in the point cloud processing unit and the plurality of second point cloud segment data including the at least one second point cloud segment data being unprocessed.

17. The data processing apparatus according to any one of claims 1 to 16, wherein
the point cloud processing unit performs processings for at least two first point cloud segment data of the plurality of first point cloud segment data in parallel.

18. The data processing apparatus according to any one of claims 1 to 17, wherein
the point cloud processing unit makes processing parameters different between the processings for the at least two first point cloud segment data of the plurality of first point cloud segment data.

19. A robot control system comprising:
the segmentation unit, the converter, and the point cloud processing unit included in the data processing apparatus according to any one of claims 1 to 18; and
a robot controller configured to control a robot, based on the plurality of first point cloud segment data processed in the point cloud processing unit or combined point cloud data obtained by combining the plurality of first point cloud segment data.

20. The robot control system according to claim 19, wherein
the robot controller recognizes an object in the measurement space, based on the plurality of first point cloud segment data or the combined point cloud data.

21. A program configured to cause a computer apparatus to:
divide at least a part of distance image data including distance information to a measurement point in a measurement space into a plurality of first distance image segment data depending on the distance information;
individually convert each of the plurality of first distance image segment data to first point cloud segment data being point cloud data including coordinate information of the measurement point in the measurement space; and
individually perform processing on each of a plurality of the first point cloud segment data respectively obtained from the plurality of first distance image segment data.

22. A program configured to cause a computer apparatus to:
convert at least a part of distance image data including distance information to a measurement point in a measurement space to first point cloud data including coordinate information of the measurement point in the measurement space;
divide at least a part of the first point cloud data into a plurality of first point cloud segment data depending on a coordinate value of the measurement space in a depth direction; and
individually perform processing on each of the plurality of first point cloud segment data.
